# EUROPEAN PATENT APPLICATION

(11) **EP 2 172 695 A2**
(43) Date of publication of application: **07.04.2010**
(21) Application number: 09171062.4
(22) Date of filing: 23.09.2009
(51) Int. Cl.: F21V 5/00, G02B 17/08

(54) **Light distribution panel having light distribution curves formed of multiple faces**

(30) Priority: 03.10.2008 US 285389
(71) Applicant: Taiwan Network Computer & Electronic Co., Ltd., Lu-Chou Taipei Hsien 247 (TW)
(72) Inventor: Chuang, Ping-Han, 247, Taipei Hsien (TW)
(74) Representative: Zipse Habersack Kritzenberger

(57) **Abstract**

Practical for use to make a road divider/reflector or a solar collector, a light distribution panel is disclosed to include four faces that can be planar or arched faces and constitute a light distribution curve to control the moving direction of light. When used in a lamp, light is evenly distributed onto the expected illumination area, avoiding formation of Gauss distribution and providing broad area illumination. When used as a road reflector, the light distribution panel provides excellent driving safety effect. When used in a solar collector system, the light distribution panel collects a wide range of incident light.

## Description

### BACKGROUND OF THE INVENTION

### 1. Field of the Invention:

The present invention relates to light distribution technology and more particularly, to a light distribution panel having light distribution curves formed of multiple faces and designed subject to the principles of optical refraction and reflection of critical angle of the medium. The light distribution panel is suitable for use in lamps, road lines and reflectors, and solar energy collection. When used for illumination, the light distribution panel minimizes brightness loss, provides even and soft luminance, saves energy, and avoids light pollution. When used in road line, the light distribution gives a prominent indication. When used in a solar collector system, the light distribution panel lowers the cost of the solar collector panel.

### 2. Description of the Related Art:

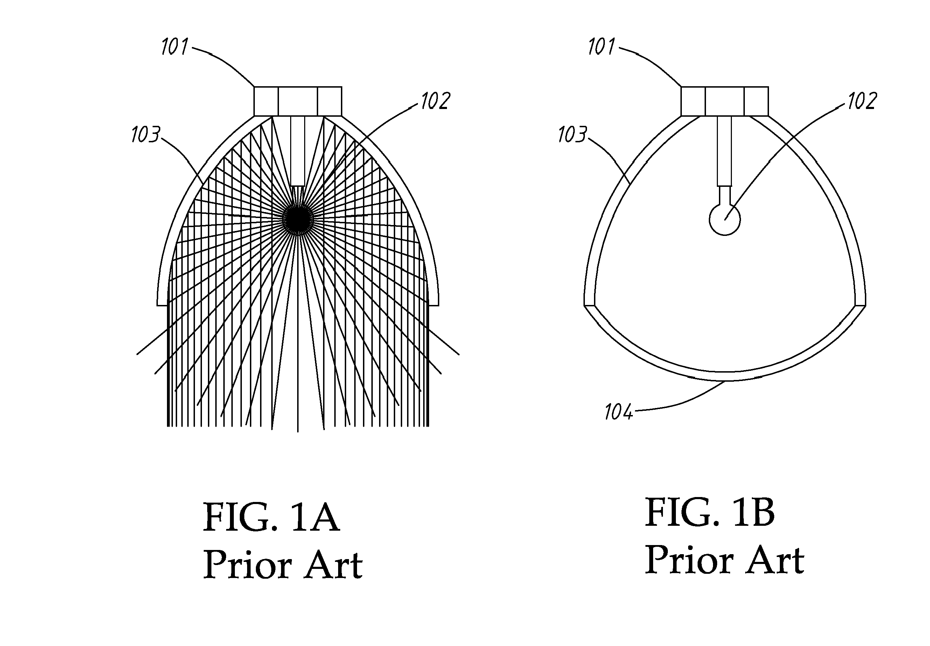

Regular lamps include two types, one for indoor application and the other for outdoor application. A lamp for indoor application, as shown in FIG. 1A, comprises a light source **102**, a hand style opaque lampshade **101** disposed around the light source **102** at the top side, and a reflector **103** provided inside the lampshade **101** for reflecting light from the light source **102** toward a predetermined illumination area. According to this design, some light rays from the light source **102** go directly to the expected illumination area, and the reflector **103** reflect the other light rays from the light source **102** toward the illumination area. To avoid glaring, the surface of the light source may be frosted.

When the aforesaid lamp is used for outdoor application, as shown in FIG. 1B, a light transmitting covering **104** may be covered on the bottom side of the lampshade **103**. To avoid glaring, the light transmitting covering **104** has tiny raised portions formed on the outer surface (to achieve the functioning of a frosted glass). However, the frosted treatment of the transmitting covering **104** or the surface of the light source **102** results in a brightness loss. Lamps of these kinds show a Gaussian distribution where the brightness is concentrated at a specific area right below the lamp.

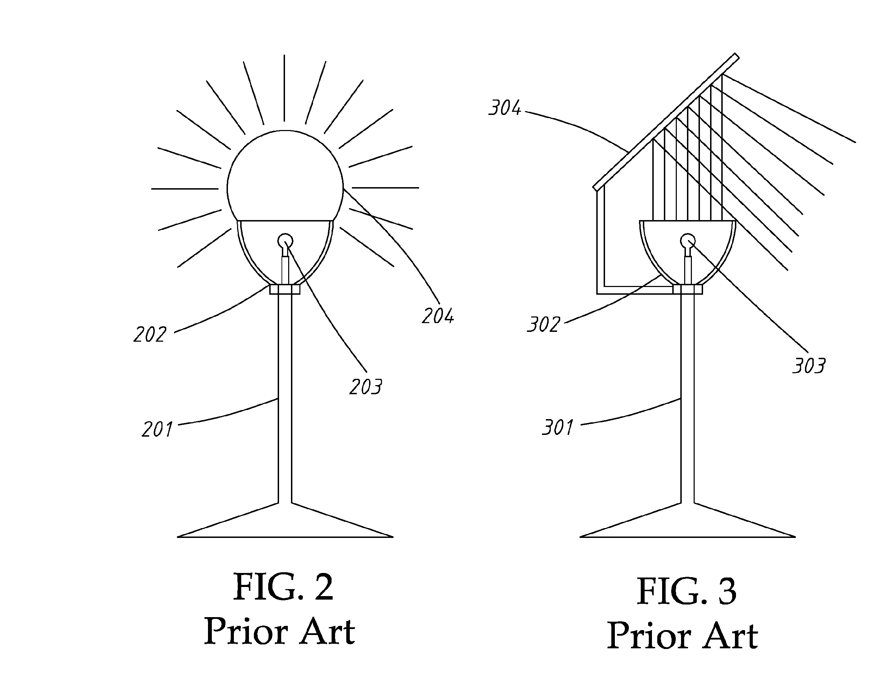

FIG. 2 is a schematic drawing showing a conventional street/park lamp. The street/park lamp comprises a lamp post **201** and a lamp **202** fixedly mounted in the top side of the lamp post **201**. The lamp **202** comprises a light source **203** upwardly disposed on the inside, and a light transmitting lampshade **204** covered over the light output side of the lamp **202**. The light transmitting lampshade **204** allows light rays to go in different directions, providing a poor road illumination effect and causing a severe light pollution.

FIG. 3 is a schematic drawing showing another design of conventional street/park lamp. According to this design, the street/park lamp comprises a lamp post **301**, a lamp **302** fixedly mounted in the top side of the lamp post **301** and having a light source **303** upwardly disposed on the inside, and a reflector **304** obliquely disposed above the lamp **302** for reflecting light rays from the light source **303** toward the ground. This design of street/park lamp has the drawback of limited illumination range.

Further, a reflector for road line generally comprises a metal frame embedded in the road, and a plastic plate member coated with a layer of a fluorescent substance and fixedly mounted in the metal frame. When light rays from the headlights of a running motor vehicle fall upon the fluorescent substance-coated plastic plate member of the reflector, the fluorescent substance-coated plastic plate member reflects the light rays, and therefore the driver can well see the direction of the road line. However, when the fluorescent substance-coated plastic plate member is covered with dust, the reflection performance of the fluorescent substance-coated plastic plate member will be lowered or even disappeared.

### SUMMARY OF THE INVENTION

The present invention has been accomplished under the circumstances in view. It is one object of the present invention to provide a light distribution panel having light distribution curves formed of multiple faces, which is practical for use in a lamp, reflector for road line or solar energy collector panel, eliminating the drawbacks of the prior art designs. When used in a lamp or reflector for road line, the light distribution panel controls the angle of refraction or reflection of the major part of incident light, enabling light be evenly projected onto a predetermined illumination area.

The light distribution panel comprises at least four faces. A number of the faces constitute a light distribution curve that controls the path of the major part of the incident light. The faces can be a planar face or arched face. Further, the tilting angle, curvature and surface area of every face are respectively designed subject to the respective desired angle of refraction or reflection.

Further, the light distribution panel can be made in a rectangular, circular, oval, or irregular shape. Further, the light distribution panel can be prepared from light transmitting plastics, light transmitting glass, or any other light transmitting materials.

### BRIEF DESCRIPTION OF THE DRAWINGS

FIG. 1A is a schematic drawing showing a lamp covered with a half style lampshade according to the prior art.
FIG. 1B is a schematic drawing showing a lamp covered with a full style lampshade according to the prior art.
FIG. 2 is a schematic drawing showing a conventional street/park lamp.
FIG. 3 is a schematic drawing showing another design of conventional street/park lamp.
FIG. 4 illustrates light refraction through a light distribution panel in accordance with the present invention (I).
FIG. 4A illustrates light refraction through a light distribution panel in accordance with the present invention (II).
FIG. 4B illustrates light refraction through a light distribution panel in accordance with the present invention (III).
FIGS. 5 and 5A show the structure of a light distribution panel in accordance with a first embodiment of the present invention.
FIG. 6 is a schematic drawing showing light path control of the light distribution panel in accordance with the 1^{st} embodiment of the present invention.
FIGS. 7, 7A and 7B show the structure of a light distribution panel in accordance with a 2^{nd} embodiment of the present invention.
FIG. 8 is a schematic drawing showing light path control of the light distribution panel in accordance with the 2^{nd} embodiment of the present invention.
FIGS. 9 and 9A show the structure of a light distribution panel in accordance with a 3^{rd} embodiment of the present invention.
FIG. 10 is a schematic drawing showing light path control of the light distribution panel in accordance with the 3^{rd} embodiment of the present invention.
FIGS. 11, 11A and 11B show the structure of a light distribution panel in accordance with a 4^{th} embodiment of the present invention.
FIGS. 12, 12A and 12B show the structure of a light distribution panel in accordance with a 5^{th} embodiment of the present invention.
FIGS. 13, 13A and 13B show the structure of a light distribution panel in accordance with a 6^{th} embodiment of the present invention.
FIGS. 14, 14A and 14B show the structure of a light distribution panel in accordance with a 7^{th} embodiment of the present invention.
FIGS. 15, 15A and 15B show the structure of a light distribution panel in accordance with a 8^{th} embodiment of the present invention.
FIGS. 16, 16A show the structure of a light distribution panel in accordance with a 9^{th} embodiment of the present invention.
FIGS. 17, 17A show the structure of a light distribution panel in accordance with a 10^{th} embodiment of the present invention.
FIGS. 18, 18A and 18B show the structure of a light distribution panel in accordance with a 11^{th} embodiment of the present invention.
FIGS. 19, 19A and 19B show the structure of a light distribution panel in accordance with a 12^{th} embodiment of the present invention.
FIGS. 20, 20A and 20B show the structure of a light distribution panel in accordance with a 13^{th} embodiment of the present invention.
FIGS. 21, 21A and 21B show the structure of a light distribution panel in accordance with a 14^{th} embodiment of the present invention.
FIG. 22 is a schematic drawing showing an application example of the present invention in a lamp.
FIG. 23 is a schematic drawing showing another application example of the present invention in a lamp.
FIG. 24 is a schematic drawing showing still another application example of the present invention in a lamp.
FIGS. 25, 25A show the structure of a light distribution panel in accordance with a 15^{th} embodiment of the present invention.
FIGS. 26, 26A show the structure of a light distribution panel in accordance with a 16^{th} embodiment of the present invention.
FIGS. 27, 27A show the structure of a light distribution panel in accordance with a 17^{th} embodiment of the present invention.
FIGS. 28, 28A and 28B show the structure of a light distribution panel in accordance with a 18^{th} embodiment of the present invention.
FIGS. 29, 29A and 29B show the structure of a light distribution panel in accordance with a 19^{th} embodiment of the present invention.
FIGS. 30, 30A and 30B show the structure of a light distribution panel in accordance with a 20^{th} embodiment of the present invention.
FIG. 31 is a schematic drawing showing an application example of the present invention in a reflector for road line.
FIGS. 32 and 32A show an application example of the present invention in a solar collector system.
FIGS. 33, 33A show the structure of a light distribution panel in accordance with a 21^{st} embodiment of the present invention.
FIGS. 34, 34A and 34B show the structure of a light distribution panel in accordance with a 22^{nd} embodiment of the present invention.
FIGS. 35, 35A and 35B show the structure of a light distribution panel in accordance with a 23^{rd} embodiment of the present invention.
FIGS. 36, 36A show the structure of a light distribution panel in accordance with a 24^{th} embodiment of the present invention.
FIGS. 37, 37A and 37B show the structure of a light distribution panel in accordance with a 25^{th} embodiment of the present invention.
FIG. 38 is a schematic drawing showing an application example of the present invention in a solar collector panel.

### DETAILED DESCRIPTION OF THE PREFERRED EMBODIMENT

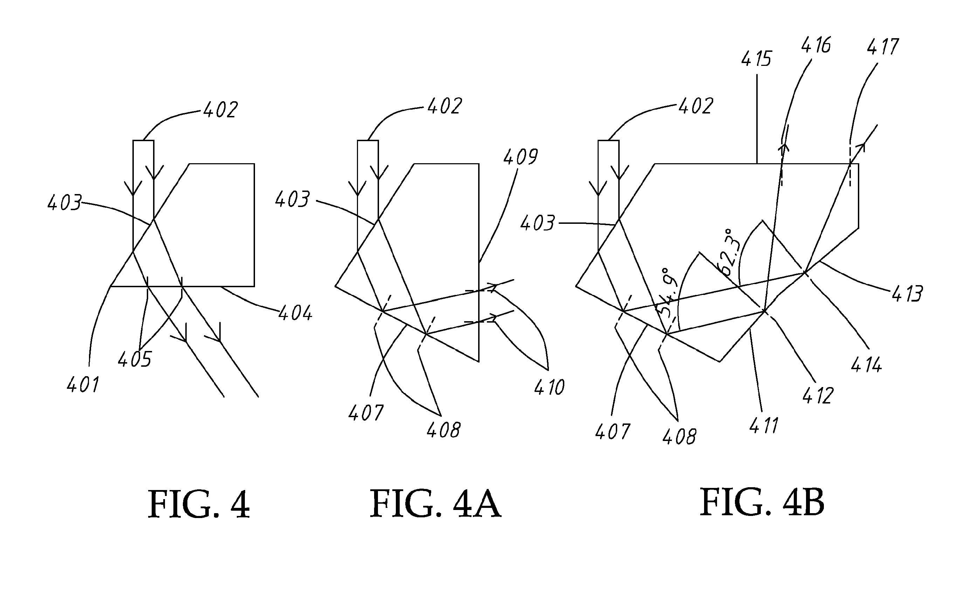

Referring to FIGS. 4, 4A and 4B, the drawings illustrate the structure and principle of the present invention and explain the operation of the present invention in controlling the movement of light rays.

Referring to FIG. 4, a light distribution panel **401** is shown having multiple faces. When two incident light rays **402** fall upon one face **403** of the light distribution panel **401** at one same angle and go to another face **404** after refraction, the contained angle between the incident light rays **402** and the normal line **405** is smaller than the critical angle of the light distribution panel. Subject to refraction law, the light rays are refracted out of the light distribution panel.

When changing the angle of the face **404** shown in FIG. 4 to the angle of the face **407** shown in FIG. 4A, the contained angle between the incident light rays **402** and the normal line **408** is greater than the critical angle of the light distribution panel. Subject to reflection law (the angle of incidence is equal to the angle of reflection), the light rays are reflected rightwardly upwards to another face **409**. At this time, the contained angle between the incident light rays and the normal line **410** of the face **409** is smaller than the critical angle of the light distribution panel. Subject to refraction law, the light rays are refracted out of the light distribution panel.

When changing the angle of the face **409** shown in FIG. 4A to the angle of the faces **411** and **413** shown in FIG. 4B, the contained angle between one incident light ray **402a** and the normal line **412** of the face **411** is 54.9°, greater than the critical angle of the light distribution panel, and therefore, subject to reflection law, the light ray is reflected rightwardly upwards toward another face **415**. At this time, the contained angle between the incident light and the normal line **416** is smaller than the critical angle of the light distribution panel, and therefore this light ray is reflected out of the light distribution panel. Further, the contained angle between the other incident light ray **402b** and the normal line **414** of the face **413** 62.3° is greater than the critical angle of the light distribution panel, therefore, subject to reflection law, the light ray is reflected in the light distribution panel rightwardly upwards toward another face **415**. At this time, the contained angle between the incident light and the normal line **417** is smaller than the critical angle of the light distribution panel, and therefore the light ray is refracted out of the light distribution panel subject to refraction law.

Therefore, by means of properly adjusting the tilting angle, curvature and surface area of every face of a multiple-face light distribution panel the light path is controlled toward the expected illumination area.

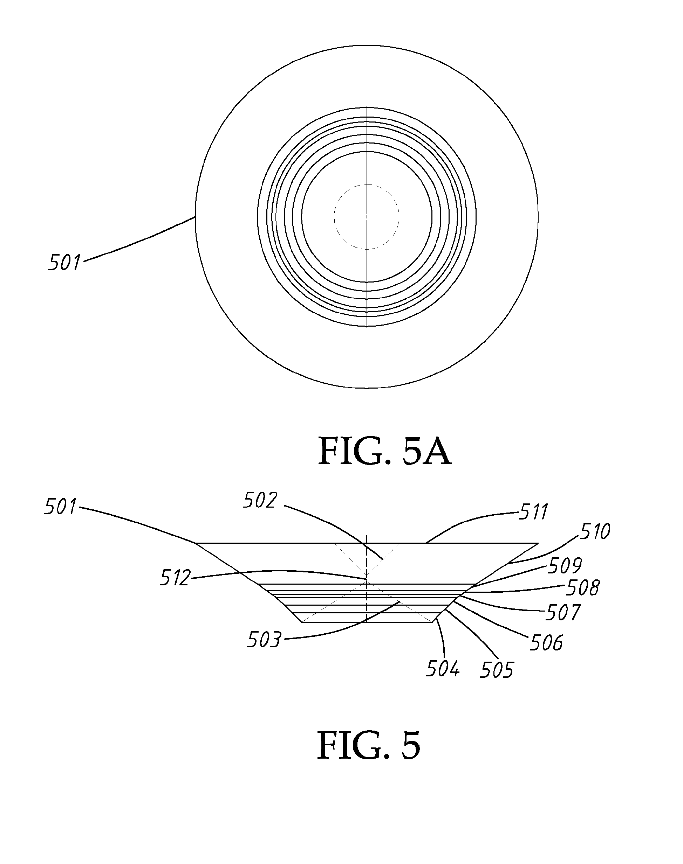

Exemplars of the present invention will now be described hereinafter. FIGS. 5 and 5A show a light distribution panel having multiple faces for producing a light distribution curve in accordance with a first embodiment of the present invention. The light distribution panel **501** has a center face **502** that is a light receiving face disposed at the center of the top side, a face **50** that is a light reflection face disposed at the bottom side, multiple peripheral faces **504∼510** of different specifications for reflecting or refracting light incident light rays from different angles toward a predetermined illumination area, and a top face **511** disposed at the top side for refracting all incident light rays out of the light distribution panel **501** toward the illumination area. All the faces are arranged around a center reference line **512,** constituting a circular light distribution panel. The tilting angle, curvature and surface area of every face are respectively designed subject to the respective desired angle of refraction or reflection.

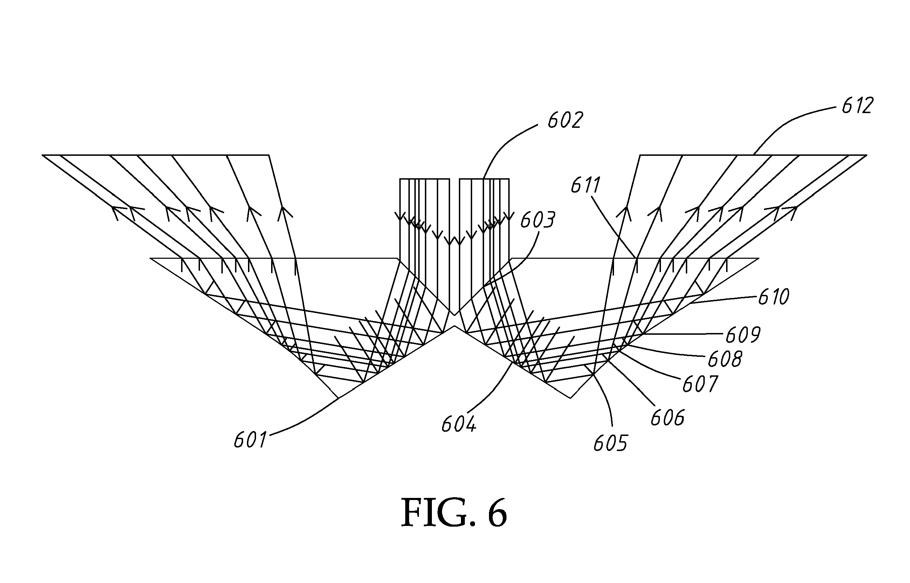

FIG. 6 is a schematic drawing showing light path control of the light distribution panel in accordance with the first embodiment of the present invention. When incident light rays **602** fall upon a center face **603** of a light distribution panel **601** at a same incident angle, all the light rays are refracted in the light distribution panel toward the inside of a face **604**. At this time, the incident angle is greater than the critical angle of the light distribution panel, therefore the light rays are reflected rightwardly upwards at an angle equal to the incident angle toward different faces of different specifications. The light rays that fall upon the face **605** at an incident angle greater than the critical angle of the light distribution panel are reflected to the top face **611**. Because the incident angle of the light rays that fall upon the top face **611** is smaller than the critical angle of the light distribution panel, these light rays are refracted onto a predetermined illumination area. The incident angle of the light rays that fall upon the face **606** is greater than the critical angle of the light distribution panel, and therefore these light rays are reflected upwardly onto the top face **611**. At this time, the incident angle of the light rays is greater than the critical angle of the light distribution panel, and therefore these light rays are reflected onto the predetermined illumination area. The other light rays go in a similar manner toward the predetermined illumination area. However, because the light rays fall upon different faces of different specifications, they are reflected at different angles. From the range **612** within which the light rays are reflected out of the light distribution panel, the light distribution panel having multiple faces for producing a light distribution curve effectively control the moving directions of light rays toward a predetermined illumination area, achieving the effects of broad illumination and even distribution of light.

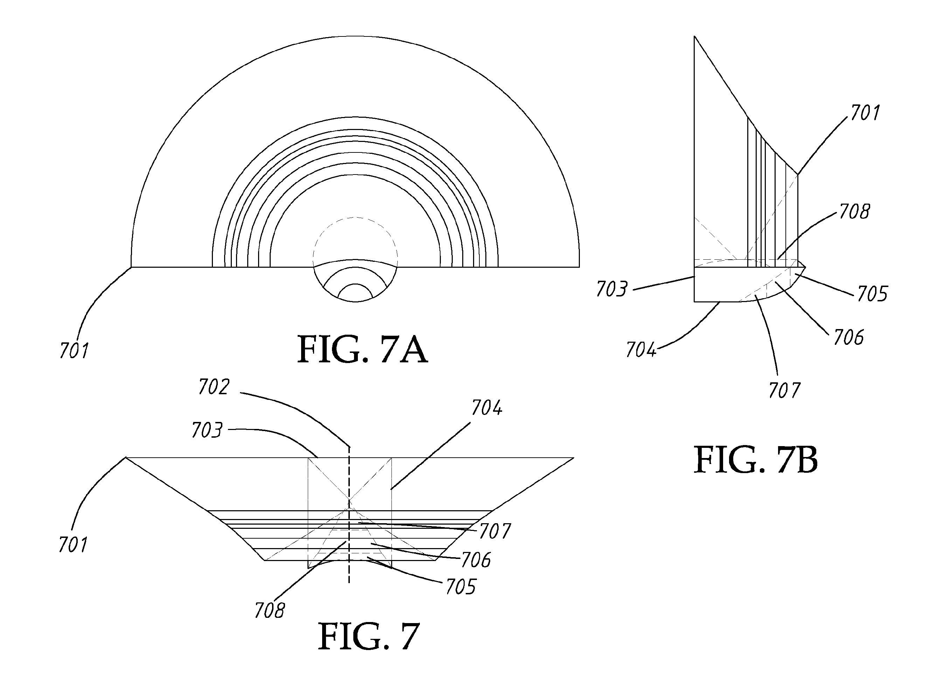

FIGS. 7, 7A and 7B show a light distribution panel having multiple faces for producing a light distribution curve in accordance with a second embodiment. The light distribution panel **701** according to this second embodiment is substantially similar to the aforesaid first embodiment with the exception that the multiple faces are arranged around a center reference line **702** at one half side to form a semicircular light distribution panel. The other half structure at the other side relative to the center reference line has a top face **703** that is a light receiving face for receiving light from a light source, three bottom faces **705-707** of different specifications at the bottom side for reflecting light, a first lateral face **708** at one lateral side for refracting light, and an arched second lateral face **704** at the opposite lateral side for reflecting light. The tilting angle, curvature and surface area of every face of the light distribution panel are respectively designed subject to the respective desired angle of refraction or reflection.

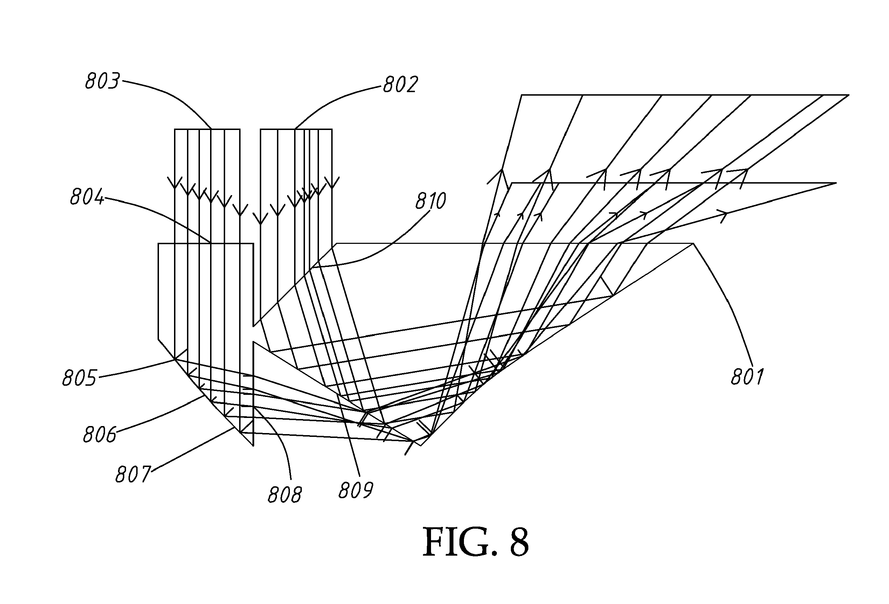

FIG. 8 is a schematic drawing showing light path control of the light distribution panel in accordance with the second embodiment of the present invention. When incident light rays **802** fall upon a light receiving face **810** at the center area of the light distribution panel **801**, these light rays are refracted and/or reflected in the same manner as shown in FIG. 6. When multiple incident light rays enter the light receiving face **804** of the other half structure of the light distribution panel **801** at the other side relative to the center reference line at a same incident angle are not refracted and go directly to the three bottom faces **805-807** at the bottom side. The incident angles of these light rays that enter the three bottom faces **805-807** are greater than the critical angle of the light distribution panel **801.** Therefore, these light rays are not refracted out of the light distribution panel **801** but reflected rightwards at different angles of reflection onto the right lateral face **808.** The incident angles of the light rays that fall upon the right lateral face **808** are smaller than the critical angle of the light distribution panel **801.** Therefore, these light rays are refracted rightwardly out of the light distribution panel **801** onto the face **809** and then refracted onto the inside of the light distribution panel **801**, and then reflected upwards by the faces of different specifications at the right side onto the illumination area. This process is same as that shown in FIG. 6, and therefore no further description in this regard is necessary. Therefore, the light distribution panel of this second embodiment enables the major part of the light rays to be radiated onto the predetermined illumination area.

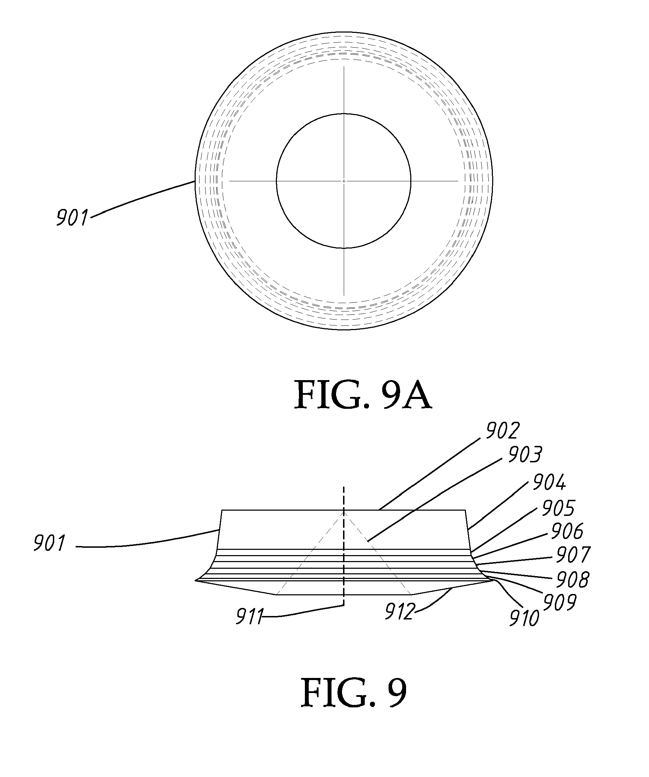

FIGS. 9 and 9A show a light distribution panel having multiple faces for producing a light distribution curve in accordance with a third embodiment. The light distribution panel **901** according to this third embodiment has a top face **902** partially designed for receiving light from a light source, a first bottom face **903** that is a reflection face for reflecting light, a second bottom face **912** that is a refraction face for refracting light, and multiple lateral faces **904**∼**910** of different specifications. Most lateral faces are designed to reflect light at a different reflection angle. The other lateral faces are designed to refract light at a different refraction angle. Light rays that fall upon these lateral faces finally go to a predetermined illumination area. The faces of this light distribution panel are arranged around a center reference line **911**, forming a circular configuration. Further, the tilting angle, curvature and surface area of every face are respectively designed subject to the respective desired angle of refraction or reflection.

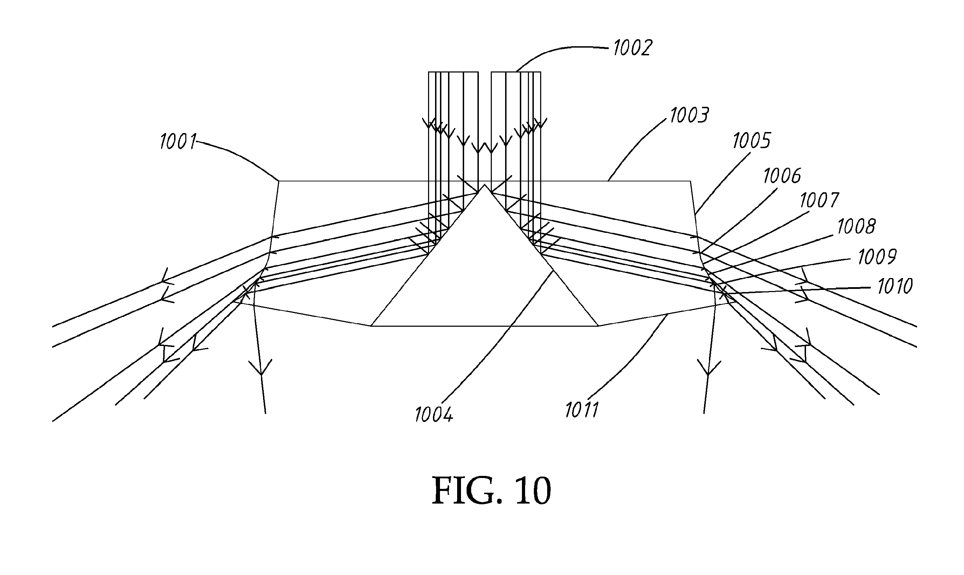

FIG. 10 is a schematic drawing showing light path control of the light distribution panel in accordance with the third embodiment of the present invention. When incident light rays **1002** fall upon the center area of the light receiving face **1003** of the light distribution panel **1001** at a same incident angle, these light rays directly go to the bottom face **1004** without refraction. Because the incident angles of the light rays that fall upon the bottom face **104** are greater than the critical angle of the light distribution panel **1001**, these light rays reflected rightwards onto the lateral faces at a respective reflection angle corresponding to the respective incident angle. The incident angles of the light rays that fall upon the face **1005** are smaller than the critical angle of the light distribution panel, therefore the light rays that fall upon the face **1005** are refracted onto the predetermined illumination area. The incident angles of the light rays that fall upon the face **1006** are smaller than the critical angle of the light distribution panel, therefore the light rays that fall upon the face **1006** are refracted onto the predetermined illumination area. The incident angles of the light rays that fall upon the face **1007** are smaller than the critical angle of the light distribution panel, therefore the light rays that fall upon the face **1007** are refracted onto the predetermined illumination area. The incident angles of the light rays that fall upon the face **1008** are smaller than the critical angle of the light distribution panel, therefore the light rays that fall upon the face **1008** are refracted onto the predetermined illumination area. The incident angle of the light rays that fall upon the face **1009** are greater than the critical angle of the light distribution panel, therefore the light rays that fall upon the face **1009** are reflected onto the bottom face **1011**. However, because the incident angles of the light rays that are reflected by the face **1009** onto the bottom face **1011** are smaller than the critical angle of the light distribution panel, these light rays are then refracted onto the predetermined illumination area. Further, the incident angles of the light rays that fall upon the face **1010** are greater than the critical angle of the light distribution panel, therefore the light rays that fall upon the face **1010** are reflected downwardly onto the bottom face **1011**. However, because the incident angles of the light rays that are reflected by the face **1010** onto the bottom face **1011** are smaller than the critical angle of the light distribution panel, these light rays are then refracted onto the predetermined illumination area. Therefore, the light distribution panel of this third embodiment effectively controls the moving direction of light rays toward the expected illumination area, achieving the effects of broad illumination and even distribution of light.

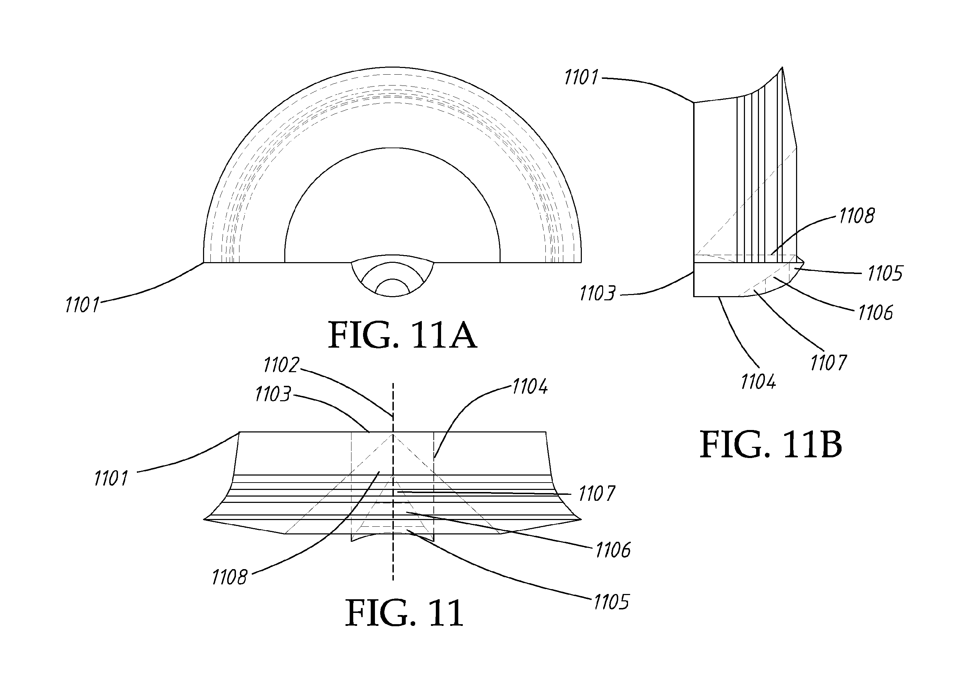

FIGS. 11, 11A and 11B show a light distribution panel in accordance with a fourth embodiment of the present invention. According to this fourth embodiment, the light distribution panel **1101** is substantially similar to the aforesaid third embodiment with the exception that with the exception that the multiple faces of the light distribution panel **1101** according to this fourth embodiment are arranged around a center reference line **1102** at one side to form a semicircular light distribution panel. The other half structure at the other side relative to the center reference line **1102** has a top face **1103** that is a light receiving face for receiving light from a light source, three bottom faces **1105, 1106** and **1107** of different specifications at the bottom side for reflecting light, a first lateral face **1108** at one lateral side for refracting light, and an arched second lateral face **1104** at the opposite lateral side for reflecting light. The tilting angle, curvature and surface area of every face of the light distribution panel **1101** are respectively designed subject to the respective desired angle of refraction or reflection.

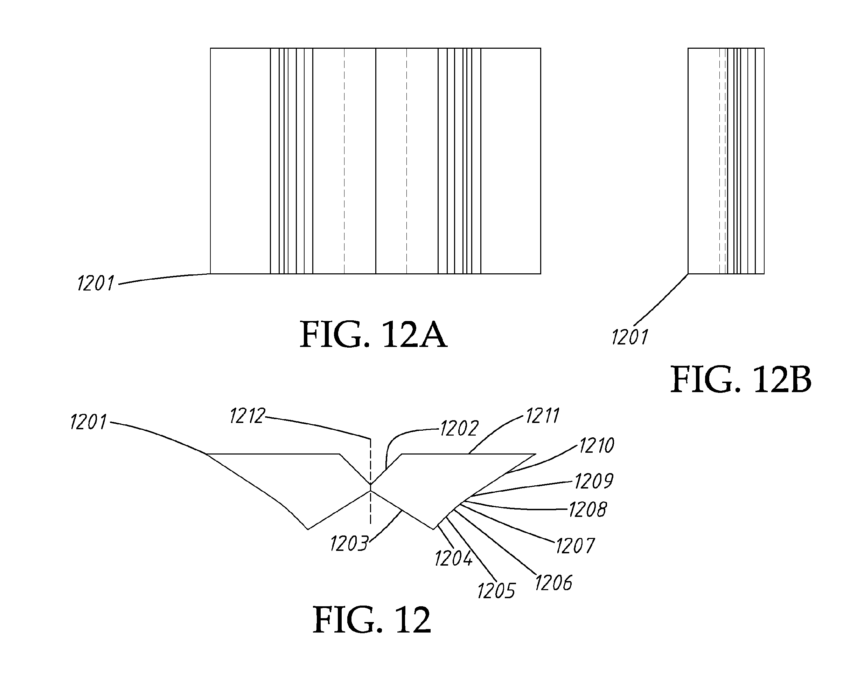

FIGS. 12, 12A and 12B show a light distribution panel in accordance with a fifth embodiment of the present invention. According to this fifth embodiment, the light distribution panel **1201** comprises a bottom face **1203** for reflecting light, a plurality of lateral faces **1204-1210** for refracting or reflecting light at a different angle toward a predetermined illumination area, and a top face **1211** for refracting light out of the light distribution panel **1201** onto the predetermined illumination area. The faces of the light distribution panel **1201** are arranged on or around a center reference line, thereby constituting a rectangular light distribution panel. The tilting angle, curvature and surface area of every face of the light distribution panel **1201** are respectively designed subject to the respective desired angle of refraction or reflection.

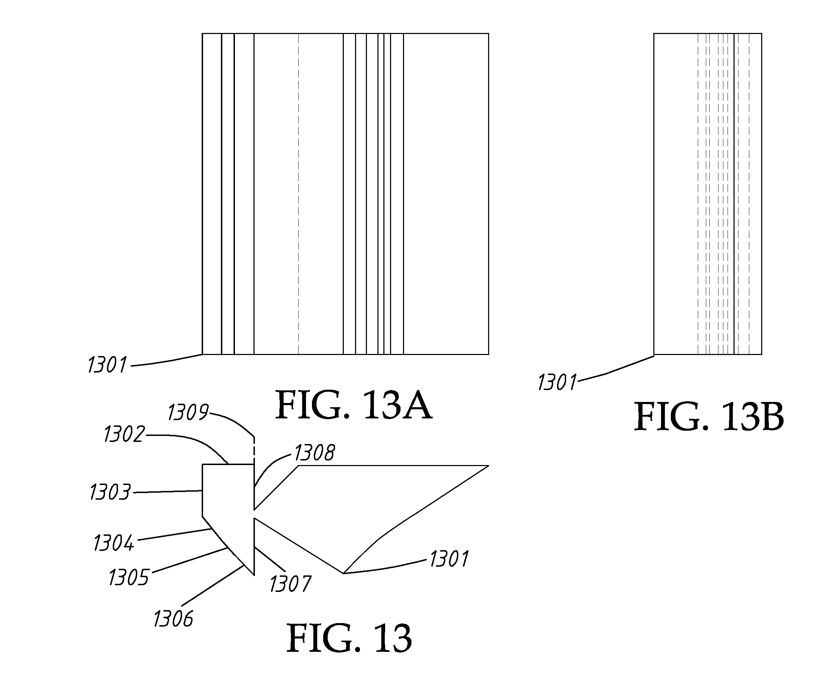

FIGS. 13, 13A and 13B show a light distribution panel in accordance with a sixth embodiment of the present invention. According to this fifth embodiment, the structure of the right half of the light distribution panel **1301** relative to the top imaginary line **1309** is substantially similar to the aforesaid fifth embodiment. The left half of the light distribution panel **1301** comprises a top face **1302** that is a light receiving face for receiving light from a light source, three bottom faces **1304**, **1305** and **1306** of different specifications designed to reflect light, two right lateral faces **1307** and **1308** for refracting light, and one left lateral face **1303** for reflecting light. The right half and left half of the light distribution panel constitute a rectangular configuration. Further, the tilting angle, curvature and surface area of every face of the light distribution panel **1301** are respectively designed subject to the respective desired angle of refraction or reflection.

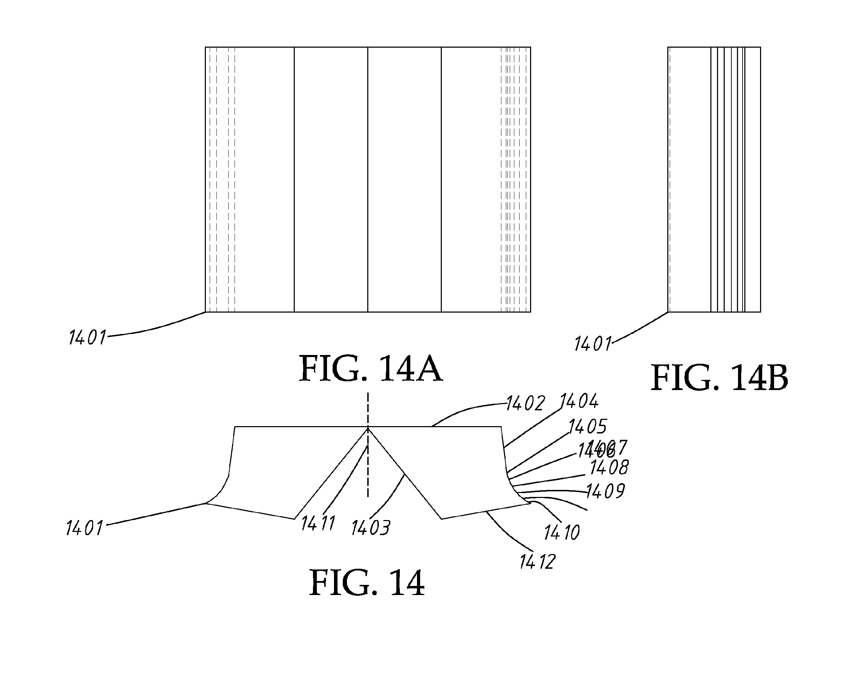

FIGS. 14, 14A and 14B show a light distribution panel in accordance with a seventh embodiment of the present invention. According to this seventh embodiment, the light distribution panel **1401** comprises a top face **1401** that has its center area adapted for receiving light from a light source, a first bottom face **1403** designed to reflect light, a second bottom face **1412** designed to refract light, and a plurality of lateral faces **1404-1410** of different specifications for reflecting or refracting light at different angles toward a predetermined illumination area. The faces are arranged on or around a center reference line **1411,** constituting a rectangular configuration. Further, the tilting angle, curvature and surface area of every face of the light distribution panel **1401** are respectively designed subject to the respective desired angle of refraction or reflection.

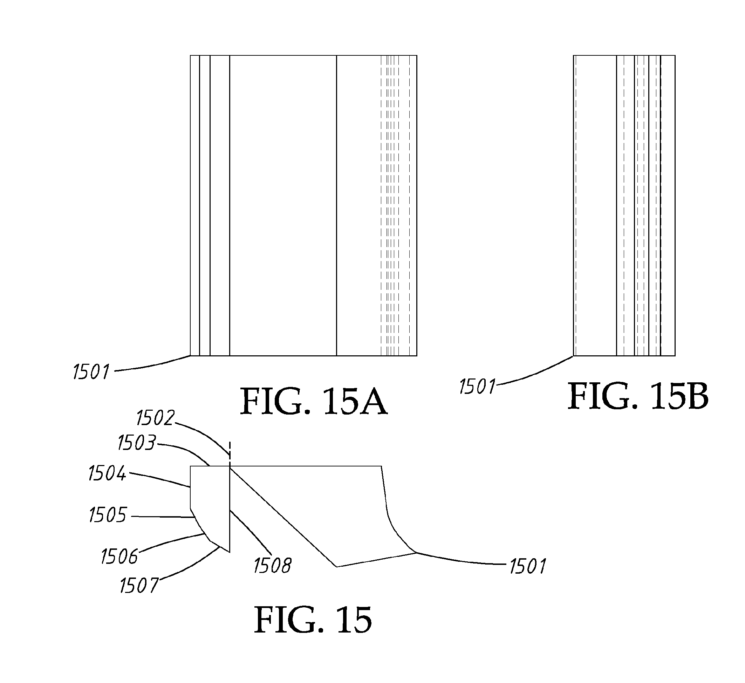

FIGS. 15, 15A and 15B show a light distribution panel in accordance with an eighth embodiment of the present invention. According to this eighth embodiment, the light distribution panel **1501** has a right half and a left half divided by an imaginary line **1502.** The structure of the right half of the light distribution panel **1501** is substantially to the right half of the aforesaid seventh embodiment. The left half of the light distribution panel **1501** comprises a top face **1503** that is a light receiving face for receiving light from a light source, three bottom faces **1505, 1506** and **1507** of different specifications for reflecting light, a right lateral face **1508** for refracting light, and a left lateral face 1504 for reflecting light. The right half and left half of the light distribution panel constitute a rectangular configuration. Further, the tilting angle, curvature and surface area of every face of the light distribution panel **1501** are respectively designed subject to the respective desired angle of refraction or reflection.

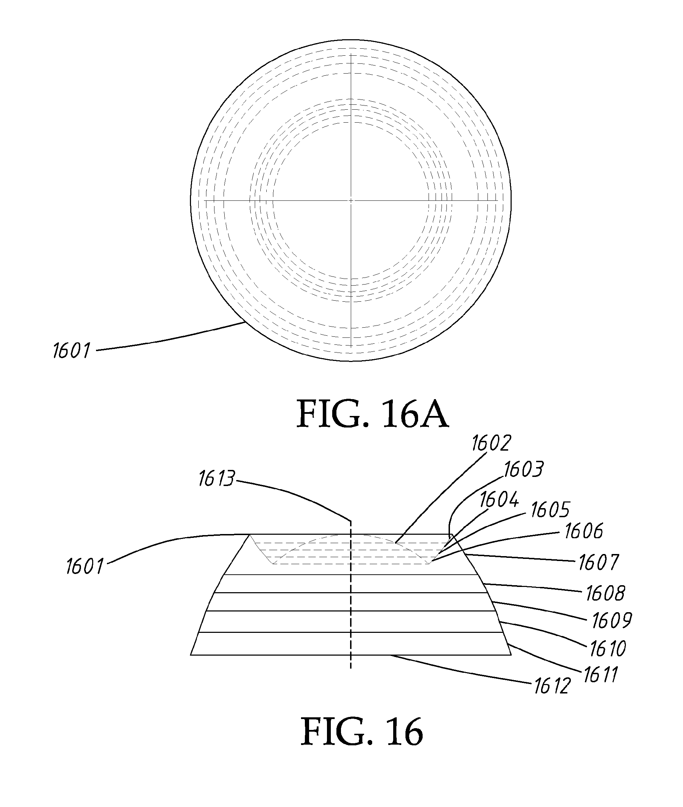

FIGS. 16 and 16A show a light distribution panel in accordance with a ninth embodiment of the present invention. According to this ninth embodiment, the light distribution panel **1601** comprises a top center face **1602** and a plurality of top border faces **1603-1606** adapted for receiving light from a light source, a bottom refractive lens **1612** for refracting light, and a plurality of lateral faces **1607-1611** of different specifications for reflecting light at different angles toward a predetermined illumination area. Based on a center reference line **1613**, the faces constitute a circular configuration. Further, the tilting angle, curvature and surface area of every face of the light distribution panel **1601** are respectively designed subject to the respective desired angle of refraction or reflection.

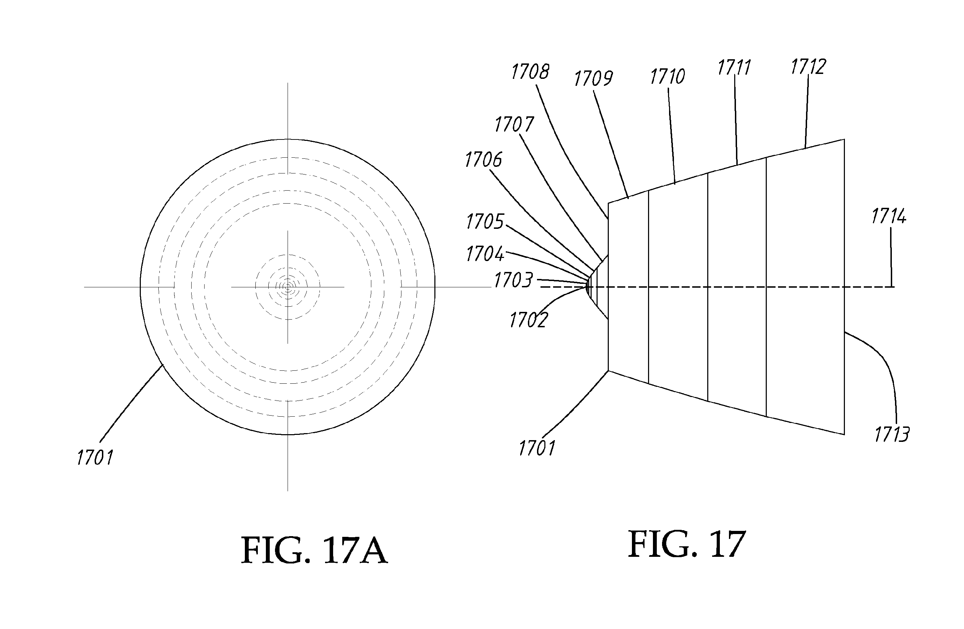

FIGS. 17 and 17A show a light distribution panel in accordance with a tenth embodiment of the present invention. According to this tenth embodiment, the light distribution panel **1701** comprises a plurality of top faces **1702-1708** designed for receiving light from a light source, a bottom face 1713 designed for refracting light, and a plurality of lateral faces **1709-1712** of different specifications for reflecting light at different angles toward a predetermined illumination area. Based on a center reference line **1714**, the faces constitute a circular configuration. Further, the tilting angle, curvature and surface area of every face of the light distribution panel **1701** are respectively designed subject to the respective desired angle of refraction or reflection.

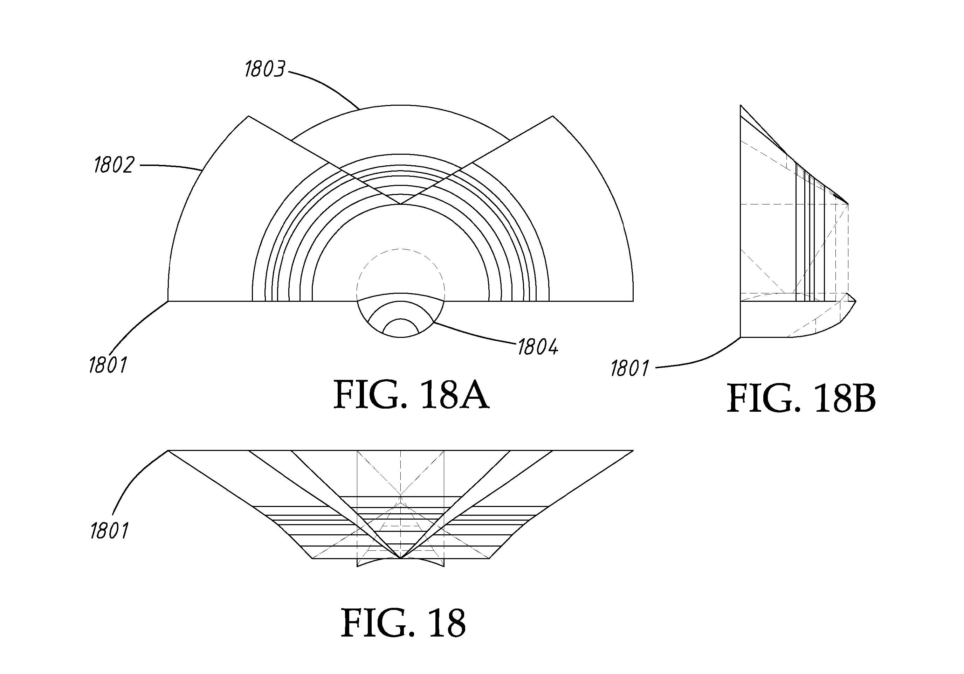

FIGS. 18, 18A and 18B show a light distribution panel in accordance with a 11^{th} embodiment of the present invention. According to this 11^{th} embodiment, the light distribution panel **1801** comprises multiple sets of faces **1802, 1803** and **1804** of different specifications. The tilting angle, curvature and surface area of every face of the light distribution panel **1801** are respectively designed subject to the respective desired angle of refraction or reflection.

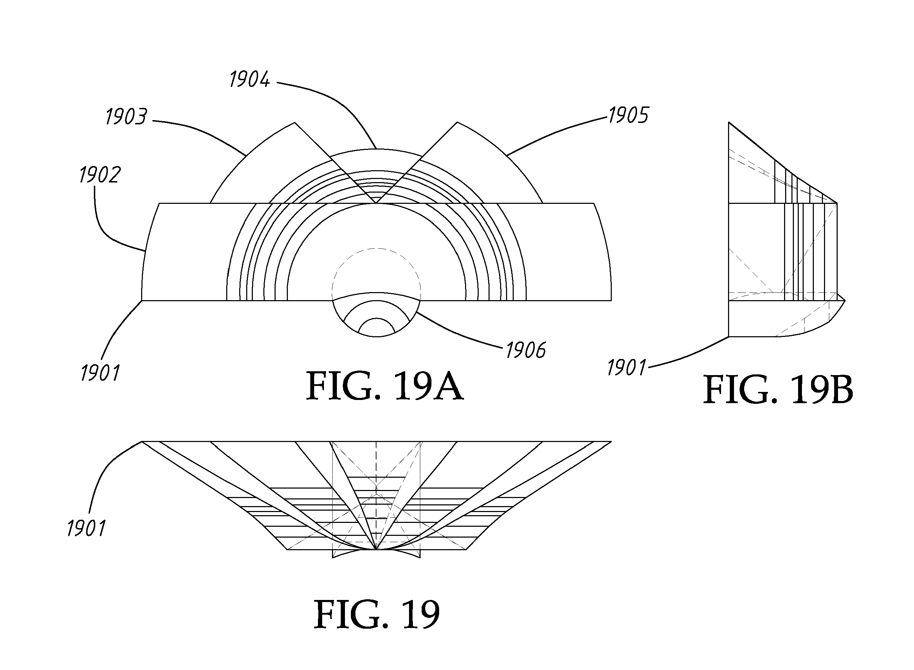

FIGS. 19, 19A and 19B show a light distribution panel in accordance with a 12^{th} embodiment of the present invention. According to this 12^{th} embodiment, the light distribution panel **1901** comprises multiple sets of faces **1902∼1906** of different specifications. The tilting angle, curvature and surface area of every face of the light distribution panel **1901** are respectively designed subject to the respective desired angle of refraction or reflection.

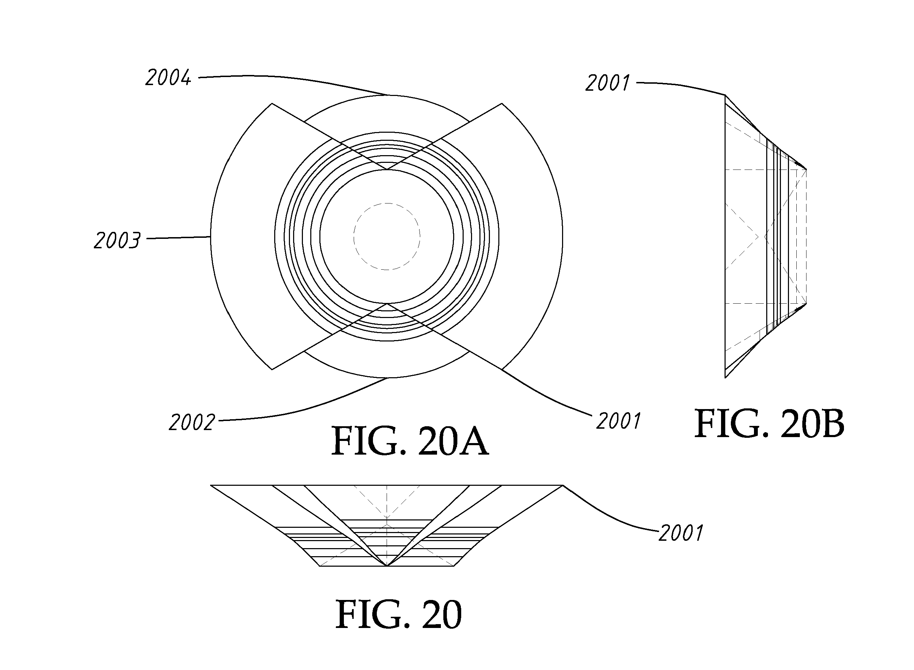

FIGS. 20, 20A and 20B show a light distribution panel in accordance with a 13^{th} embodiment of the present invention. According to this 13^{th} embodiment, the light distribution panel **2001** comprises multiple sets of faces **2002, 2003** and **2004** of different specifications. The tilting angle, curvature and surface area of every face of the light distribution panel **2001** are respectively designed subject to the respective desired angle of refraction or reflection.

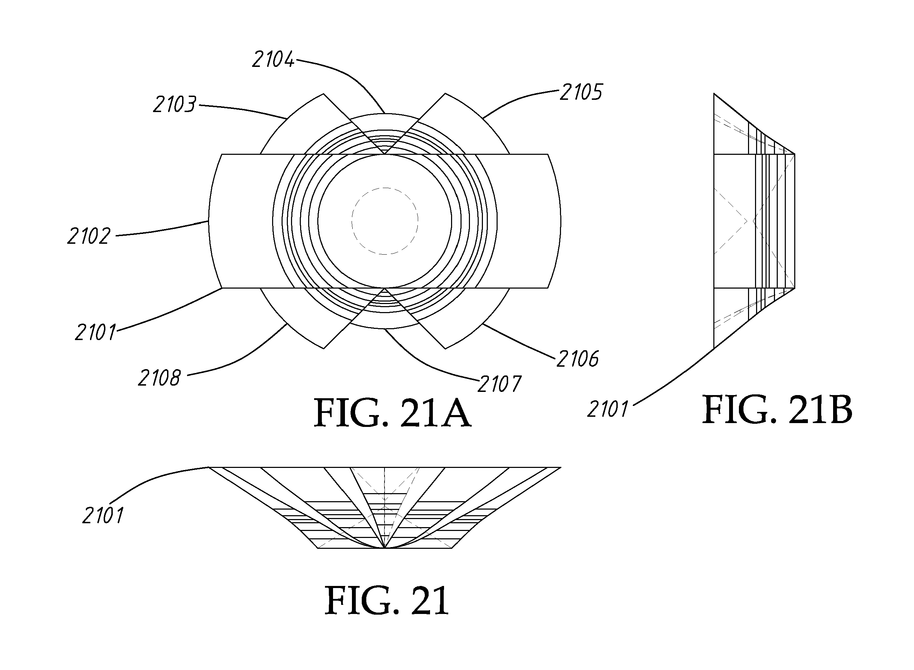

FIGS. 21, 21A and 21B show a light distribution panel in accordance with a 14^{th} embodiment of the present invention. According to this 14^{th} embodiment, the light distribution panel **2101 c**omprises multiple sets of faces **2102∼2108** of different specifications. The tilting angle, curvature and surface area of every face of the light distribution panel **2101** are respectively designed subject to the respective desired angle of refraction or reflection.

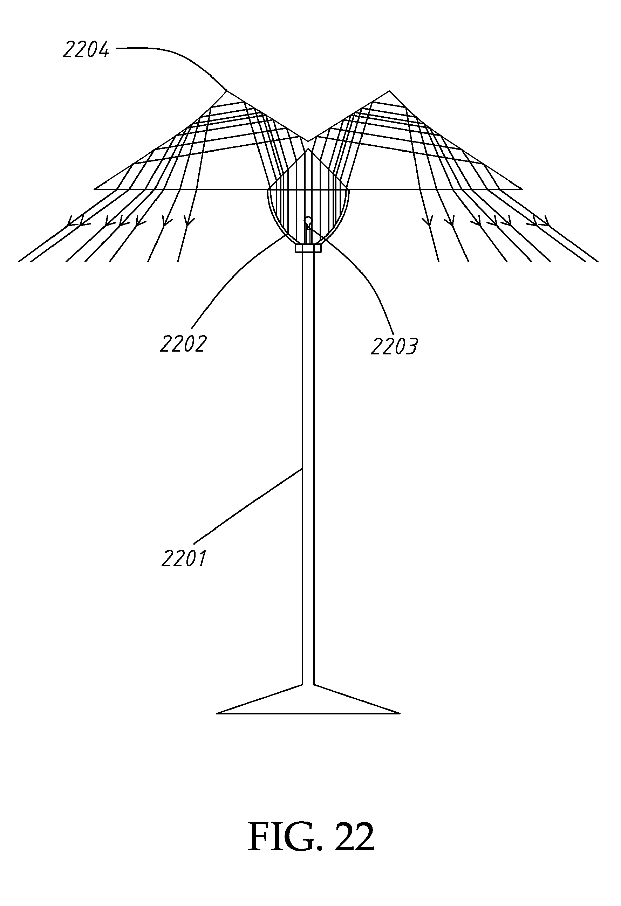

FIG. 22 shows a first application example of the present invention. According to this first application example of the present invention, the light distribution panel is used in a floor lamp that comprises a lamp stand **2201,** a lamp **2202** fixedly provided at the top side of the lamp stand **2201,** a light source **2203** upwardly arranged in the lamp **2202,** and a light distribution panel **2204** selected from the aforesaid 1^{st}∼14^{th} embodiments of the present invention and arranged around the lamp **2202.** According to this application example, the light distribution panel **2204** is prepared subject to the 1^{st} embodiments of the present invention. Light rays from the light source **2203** are refracted and reflected through the light distribution panel **2204** toward the floor.

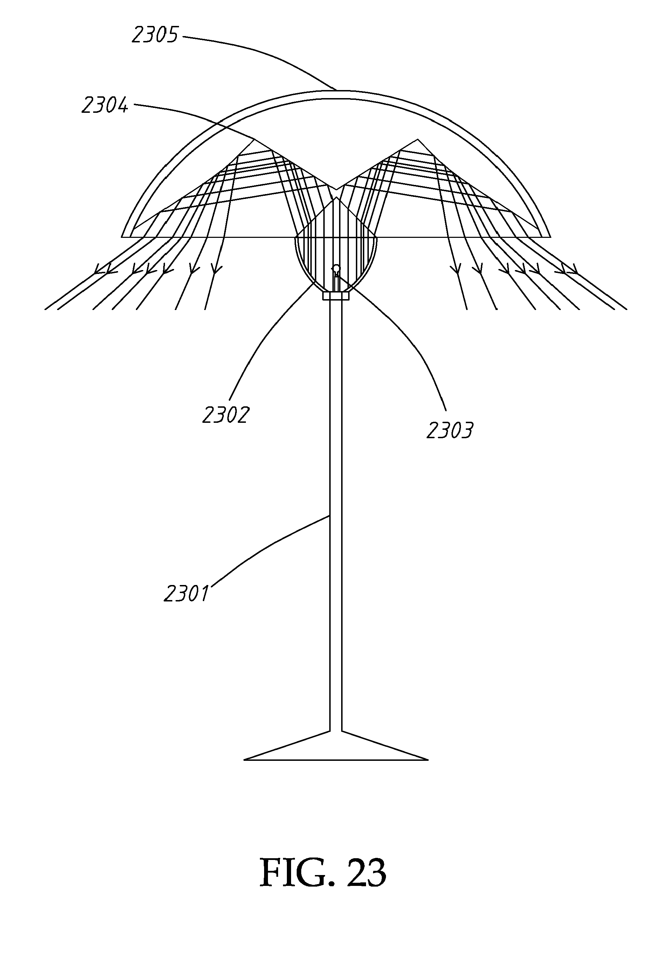

FIG. 23 shows a second application example of the present invention. According to this second application example of the present invention, the light distribution panel is used in a floor lamp that comprises a lamp stand **2301**, a lamp **2302** fixedly provided at the top side of the lamp stand **2301**, a light source **2303** upwardly arranged in the lamp **2302**, a light distribution panel **2304** selected from the aforesaid 1^{st}∼14^{th} embodiments of the present invention, for example, the first embodiment of the present invention and arranged around the lamp **2302**, and an opaque lampshade **2305** covered on the top side of the light distribution panel **2304**. Light rays from the light source **2303** are refracted and reflected through the light distribution panel **2304** toward the floor.

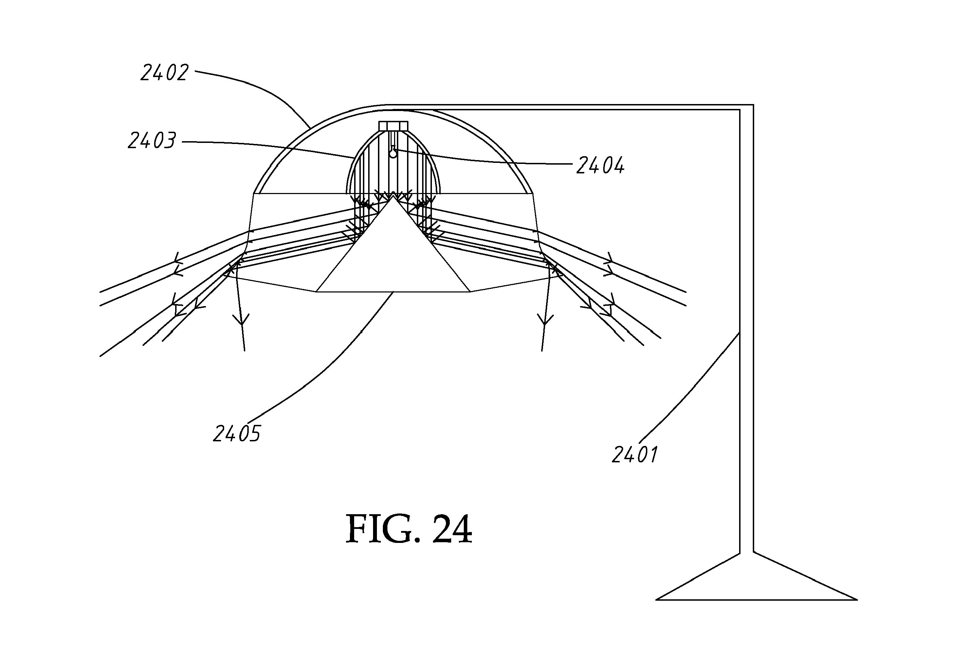

FIG. 24 shows a third application example of the present invention. According to this third application example, the light distribution panel is used in a floor lamp that comprises a lamp stand **2401**, an opaque lampshade **2402** fastened to the horizontally extending upper part of the lamp stand **2401,** a light source **2404** suspending inside the opaque lampshade **2402,** a reflector **2403** mounted inside the opaque lampshade **2402** over the light source **2404** for reflecting light from the light source **2404** downwardly toward the floor, and a light distribution panel **2405** selected from the aforesaid 1^{st}∼14^{th} embodiments of the present invention and arranged at the bottom side of the lamp that is formed of the aforesaid opaque lampshade **2402**, reflector **2403** and light source **2404.** According to this application example, the light distribution panel **2405** is prepared subject to the 3^{rd} embodiments of the present invention. Light rays from the light source **2403** are refracted and reflected through the light distribution panel **2205** toward the floor.

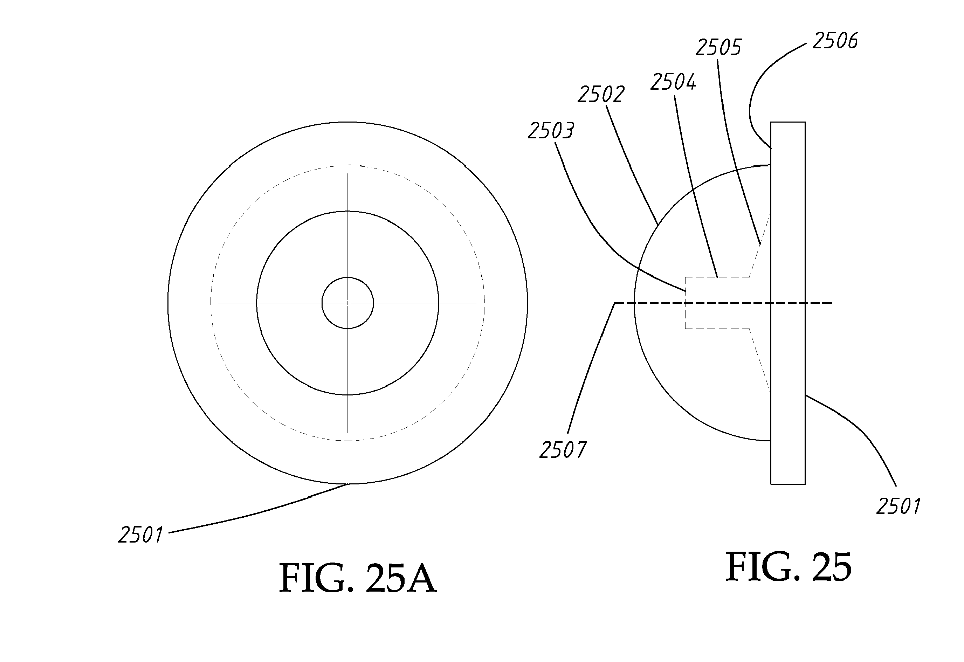

FIGS. 25 and 25A show a light distribution panel in accordance with a 15^{th} embodiment of the present invention. According to this 15^{th} embodiment, the light distribution panel **2501** comprises a top face **2502** adapted for the input and output of light, a plurality of bottom faces **2503, 2504** and **2505** of different specifications for reflecting light, and a protruded mounting face **2506** for mounting. The faces **2502∼2505** are based on a center reference line **2507**, constituting a circular configuration. The tilting angle, curvature and surface area of every face of the light distribution panel **2501** are respectively designed subject to the respective desired angle of refraction or reflection.

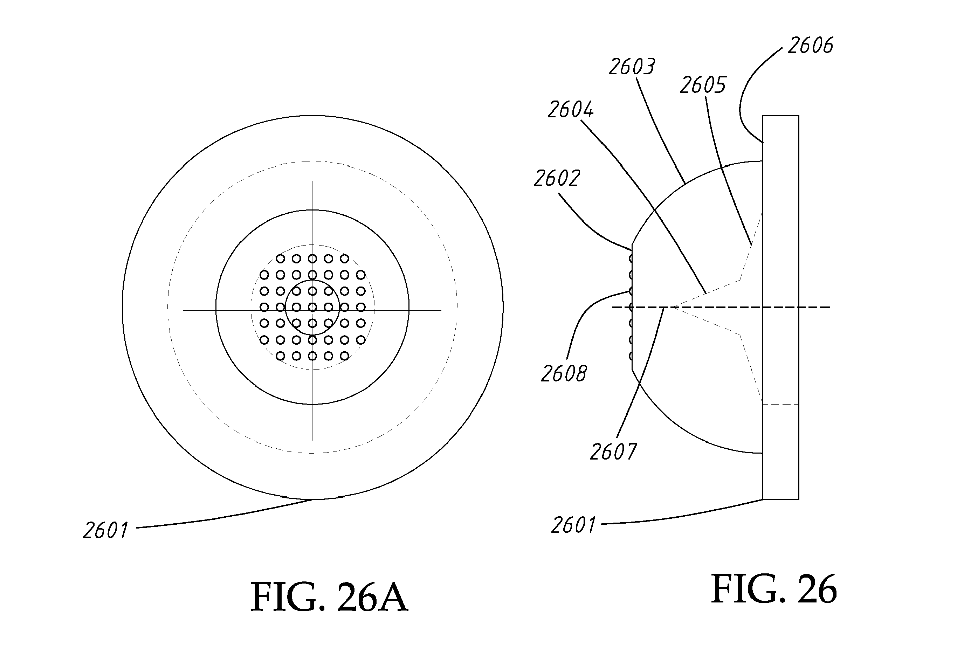

FIGS. 26 and 26A show a light distribution panel in accordance with a 16^{th} embodiment of the present invention. According to this 16^{th} embodiment, the light distribution panel **2601** comprises a top face **2602** for output of light, a peripheral face **2603** for output of light, a plurality of bottom faces **2604** and **2605** for reflecting light, and a protruded mounting face **2606** extending around the periphery of the bottom side for mounting. Based on a center reference line **2607**, the faces **2602-2606** constitute a circular configuration. Further, the top face **2602** has raised portions **2608** for output of light and for providing an anti-skip effect. Further, the tilting angle, curvature and surface area of every face of the light distribution panel **2601** are respectively designed subject to the respective desired angle of refraction or reflection.

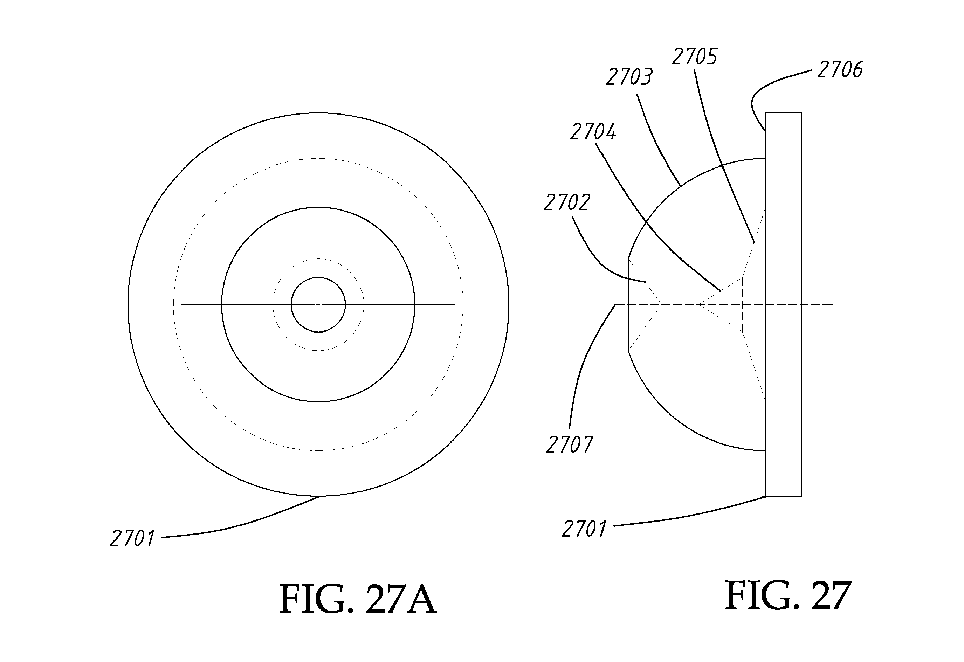

FIGS. 27 and 27A show a light distribution panel in accordance with a 17^{th} embodiment of the present invention. According to this 17^{th} embodiment, the light distribution panel **2701** comprises a top face **2702** for output of light, a peripheral face **2703** for receiving light from a light source, a plurality of bottom faces **2704** and **2705** for reflecting light, and a protruded mounting face **2706** extending around the periphery of the bottom side for mounting. Based on a center reference line **2707**, the faces **2702-2706** constitute a circular configuration. Further, the top face **2602** has raised portions **2608** for output of light and for providing an anti-skip effect. Further, the tilting angle, curvature and surface area of every face of the light distribution panel **2701** are respectively designed subject to the respective desired angle of refraction or reflection.

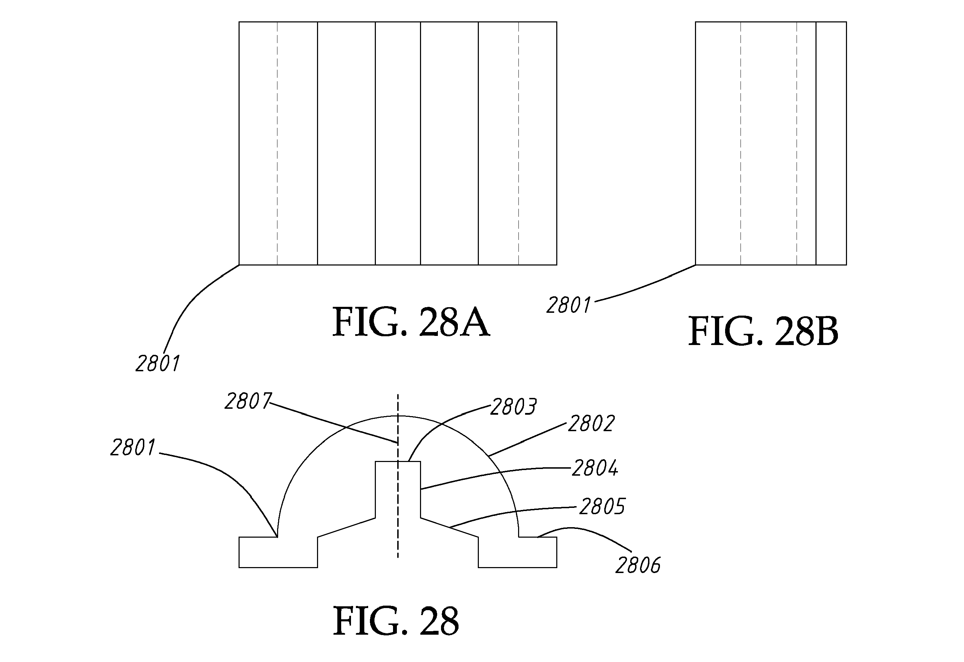

FIGS. 28, 28A and 28B show a light distribution panel in accordance with a 18^{th} embodiment of the present invention. According to this 18^{th} embodiment, the light distribution panel **2801** comprises a top face **2802** for input and output of light, a plurality of bottom faces **2803, 2804** and **2805** for reflecting light, and a protruded mounting face **2806** extending around the periphery of the bottom side for mounting. Further, the tilting angle, curvature and surface area of every face of the light distribution panel **2801** are respectively designed subject to the respective desired angle of refraction or reflection.

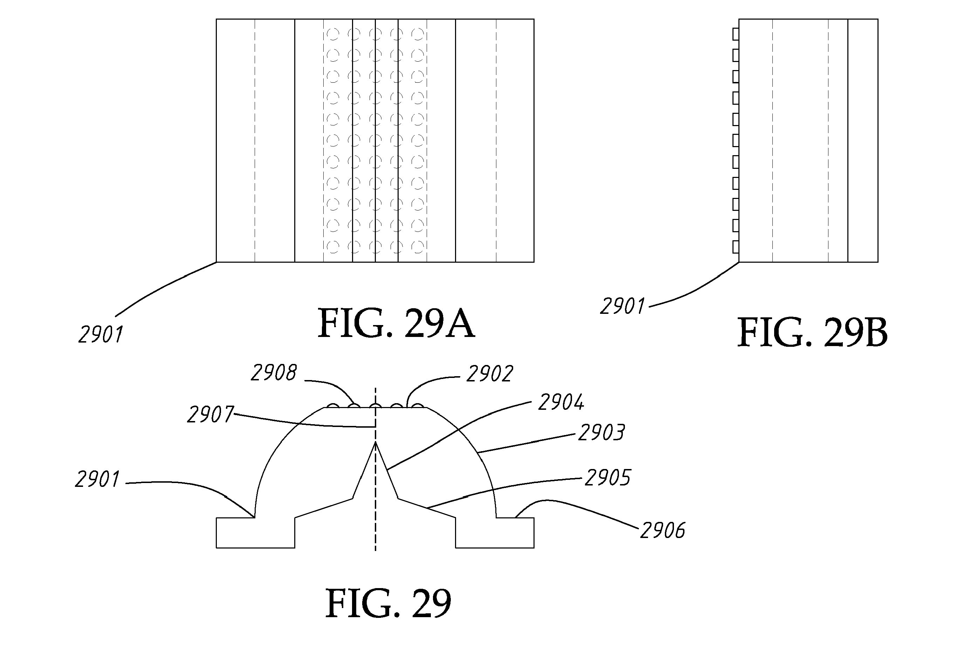

FIGS. 29, 29A and 29B show a light distribution panel in accordance with a 19^{th} embodiment of the present invention. According to this 19^{th} embodiment, the light distribution panel **2901** comprises a top face **2902** for output of light, a peripheral face **2903** for input of light, a plurality of bottom faces **2904** and **2905** for reflecting light, and a protruded mounting face **2906** extending around the periphery of the bottom side for mounting. The top face **2902** has a plurality of raised portions **2908** for output of light and for providing an anti-skip effect. Further, the tilting angle, curvature and surface area of every face of the light distribution panel **2901** are respectively designed subject to the respective desired angle of refraction or reflection.

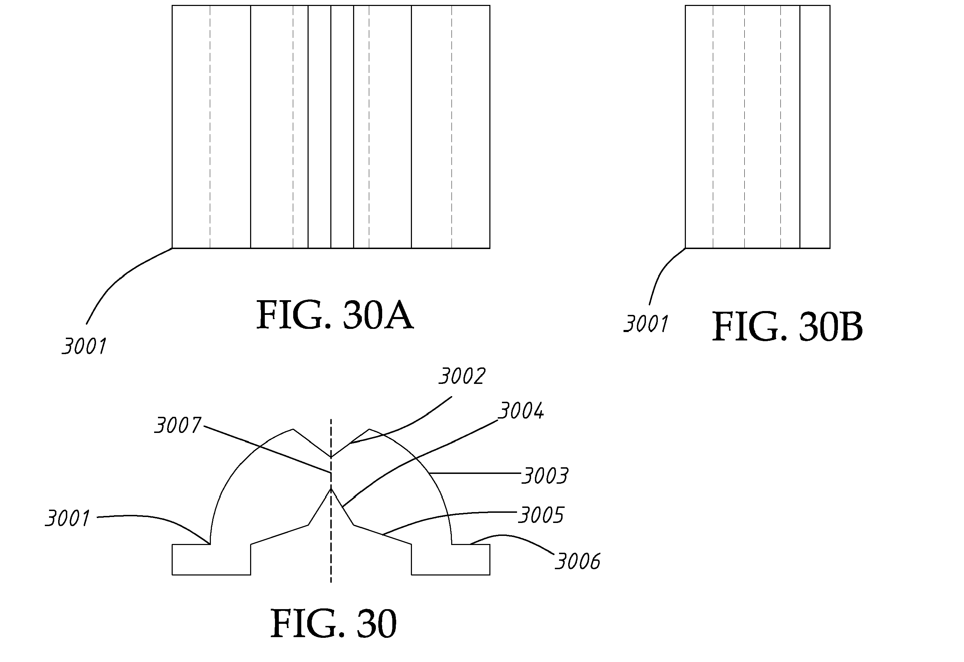

FIGS. 30, 30A and 30B show a light distribution panel in accordance with a 20^{th} embodiment of the present invention. According to this 20^{th} embodiment, the light distribution panel **3001** comprises a top face **3002** for output of light, a peripheral face **3003** for input of light, a plurality of bottom faces **3004** and **3005** for reflecting light, and a protruded mounting face **3006** extending around the periphery of the bottom side for mounting. Based on a center reference line **3007**, the faces **3002-3006** constitute a rectangular configuration. Further, the tilting angle, curvature and surface area of every face of the light distribution panel **3001** are respectively designed subject to the respective desired angle of refraction or reflection.

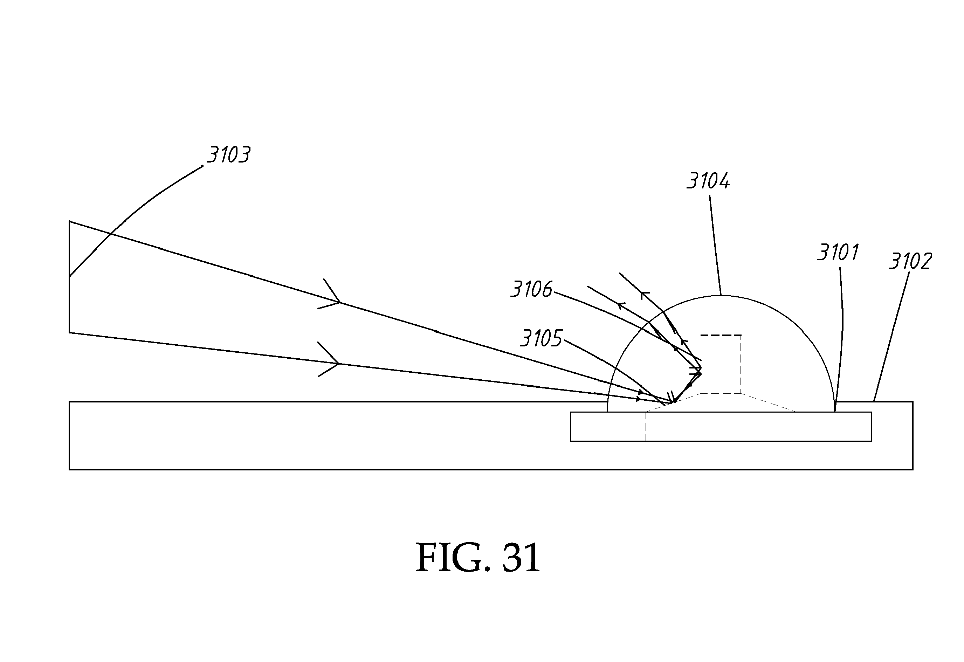

Referring to FIG. 31, a light distribution panel **3101** is constructed subject to one of the aforesaid 15^{th}∼20^{th} embodiments of the present invention, for example, the 15^{th} embodiment, and fixedly fastened to a road **3102** for use as a road divider and reflector. When light rays **3103** from the headlights of a moving vehicle fall upon the outer face **3104** of the light distribution panel **3101**, these incident light rays are refracted onto a first internal face **3105,** due to that the incident angle is greater than the critical angle of the light distribution panel. When light rays enter the first internal face **3105**, the incident angles of the light rays are greater than the critical angle of the light distribution panel, and therefore these light rays are refracted rightwards by this first internal face **3105** onto a second internal face **3106**. When light rays enter this second internal face **3106**, the incident angles of these light rays are greater than the critical angle of the light distribution panel, and therefore these light rays are refracted toward the outer face **3104**. Because the incident angles of these light rays are greater than the critical angle of the light distribution panel, these light rays go out of the outer face **3104** of the light distribution panel **3101**. Therefore, a car driver can see clearly the indication of the light distribution panel **3101**, assuring safety.

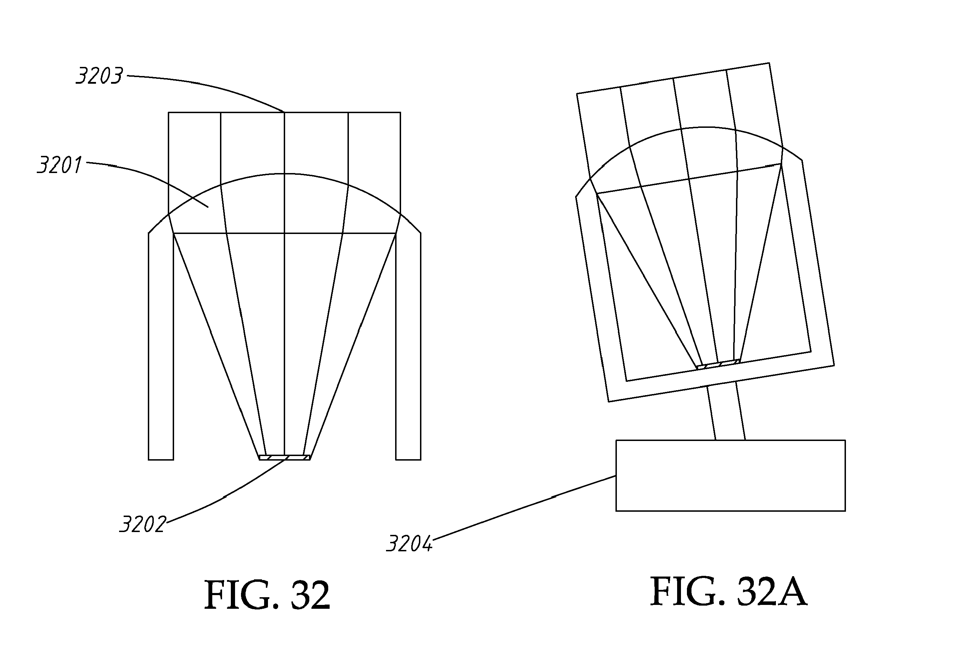

FIG. 32 illustrate a convex lens **3201** formed of a light distribution panel according to the present invention and having a solar collector **3203** on the focal point of the convex lens **3201**. When light rays fall upon the convex lens **3201**, light rays are condensed onto the solar collector **3203**. According to this fixed design, the limited light receiving angle of the convex lens **3201** is functioning to condense sunlight onto the solar collector **3203** within a limited time period. To extend the working time period, as shown in FIG. 32A, a mechanical device **3204** is used to support the structure shown in FIG. 32. This mechanical device **3204** moves the structure shown in FIG. 32 subject to the moving direction and speed of the earth relative to the sun. This arrangement effectively improves solar energy collection efficiency, however the installation cost is relatively raised.

When using a light distribution panel constructed according to the present invention in a solar system to condense the light of the sun, the effective sunlight condensing time is greatly prolonged. The use of a light distribution panel in a solar system simply increases a small amount of material cost, however it greatly improves the performance of the solar system. The invention has industrial value for use in a low-power solar system. Following embodiments are practical for use in a solar system for condensing sunlight.

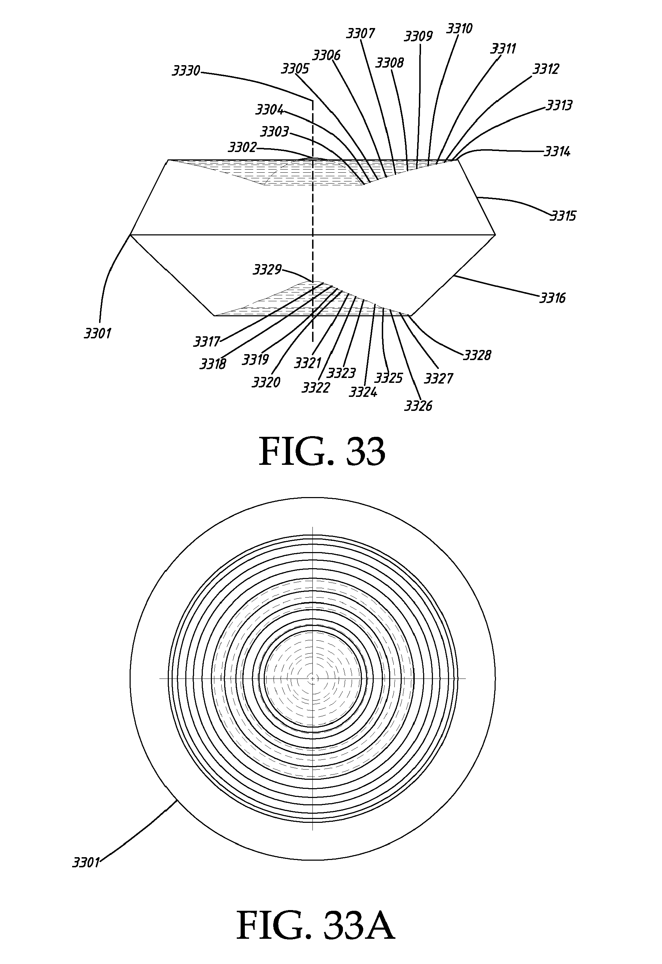

FIGS. 33 and 33A show a light distribution panel in accordance with a 21^{st} embodiment of the present invention. According to this 21^{st} embodiment, the light distribution panel **3301** comprises a top center face **3302** for input of light, a plurality of peripheral faces **3303-3314** arranged around the top center face **3302** for reflecting light, a bottom center face **3329** for refracting light, a plurality of bottom border faces **3317-3328** for reflecting light, and two lateral faces **3315** and **3316** for reflecting light. Based on a center reference line **3330**, these faces **3302-3329** constitute a circular configuration. Further, the tilting angle, curvature and surface area of every face of the light distribution panel **3301** are respectively designed subject to the respective desired angle of refraction or reflection.

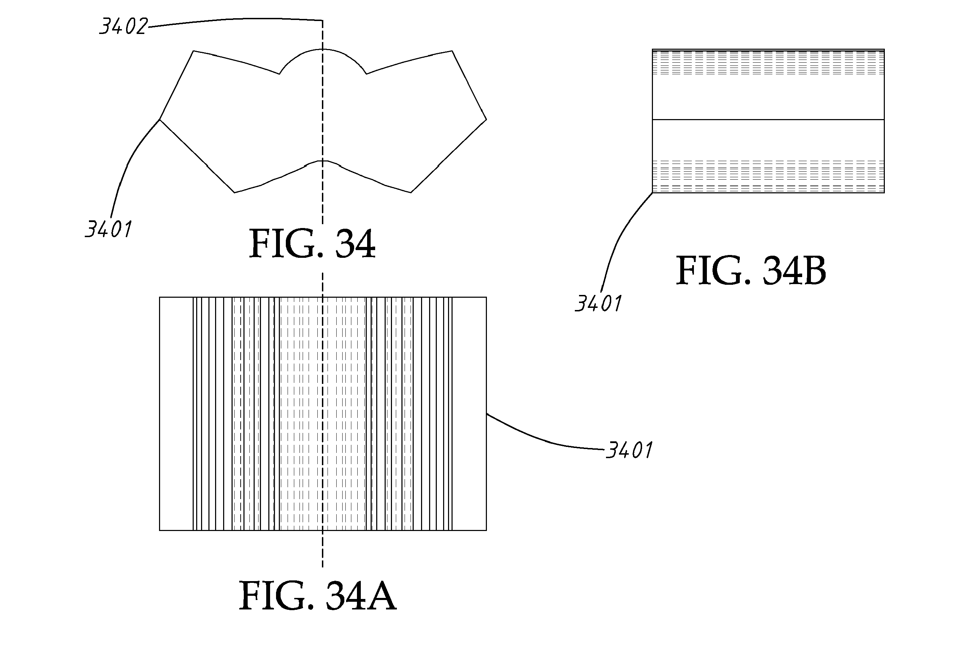

FIGS. 34, 34A and 34B show a light distribution panel in accordance with a 22^{nd} embodiment. According to this 22^{nd} embodiment, the light distribution panel **3401** has a right half and a left half divided by a center imaginary line **3402.** The structure of the right half is same as the aforesaid 21^{st} embodiment with the exception that the faces are based on the center imaginary line **3402**, constituting a rectangular configuration. Further, the tilting angle, curvature and surface area of every face of the light distribution panel **3401** are respectively designed subject to the respective desired angle of refraction or reflection.

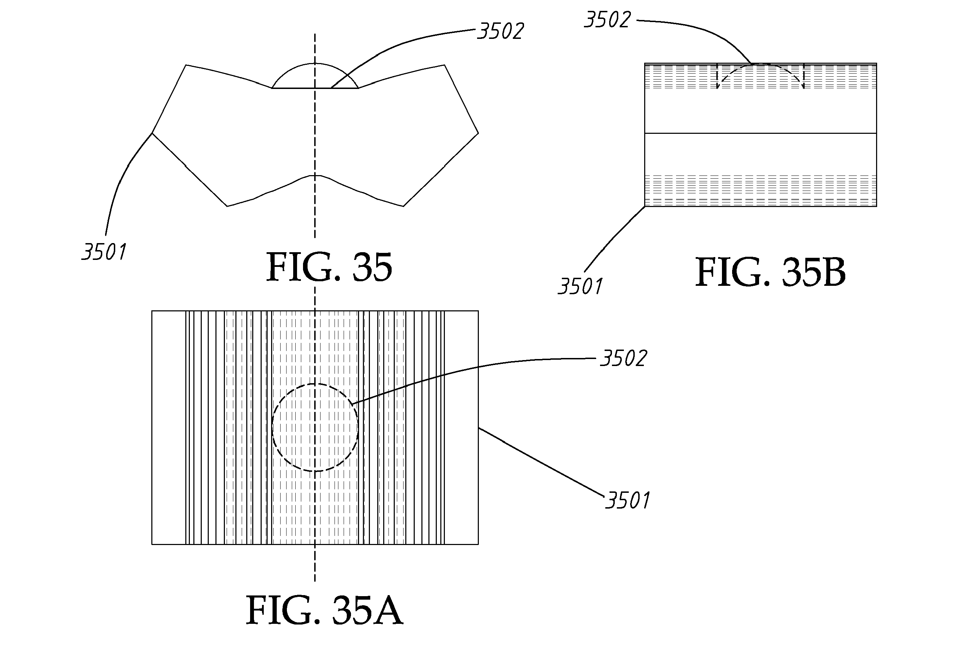

FIGS. 35, 35A and 35B show a light distribution panel in accordance with a 23^{rd} embodiment of the present invention. This 23^{rd} embodiment is substantially similar to the aforesaid 22^{nd} embodiment with the exception that the top center area of the light distribution panel **3501** is an arched face **3502.** Further, the tilting angle, curvature and surface area of every face of the light distribution panel **3501** are respectively designed subject to the respective desired angle of refraction or reflection.

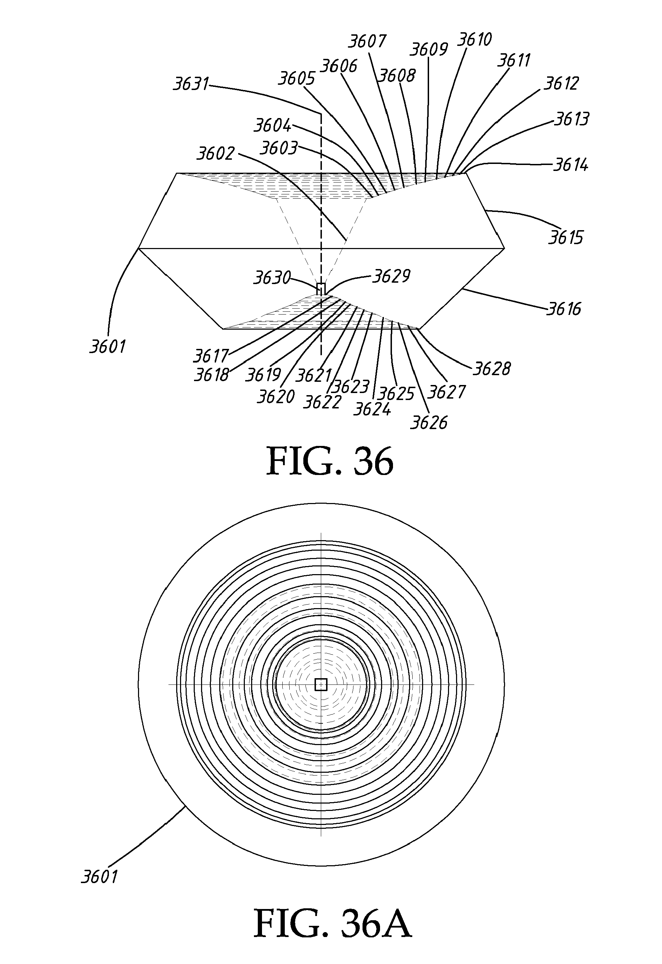

FIGS. 36 and 36A show a light distribution panel in accordance with a 24^{th} embodiment of the present invention. According to this 24^{th} embodiment, the light distribution panel **3601** comprises a top center face **3602** for input of light, a plurality of faces **3603** arranged around the top center face **3602** for reflecting light, a bottom center face **3629** that is a refracting face for output of light, a plurality of faces **3617-3628** arranged around the bottom center face **3629** for reflecting light, and two lateral faces **3615** and **3616** for reflecting light. Based on a center reference line **3631**, these faces **3602**-**3629** constitute a circular configuration. Further, the light distribution panel **3601** further comprises a through hole **3630** at the center of the bottom side. The size of the through hole **3630** is smaller than the bottom center face **3629**. Further, the tilting angle, curvature and surface area of every face of the light distribution panel **3601** are respectively designed subject to the respective desired angle of refraction or reflection.

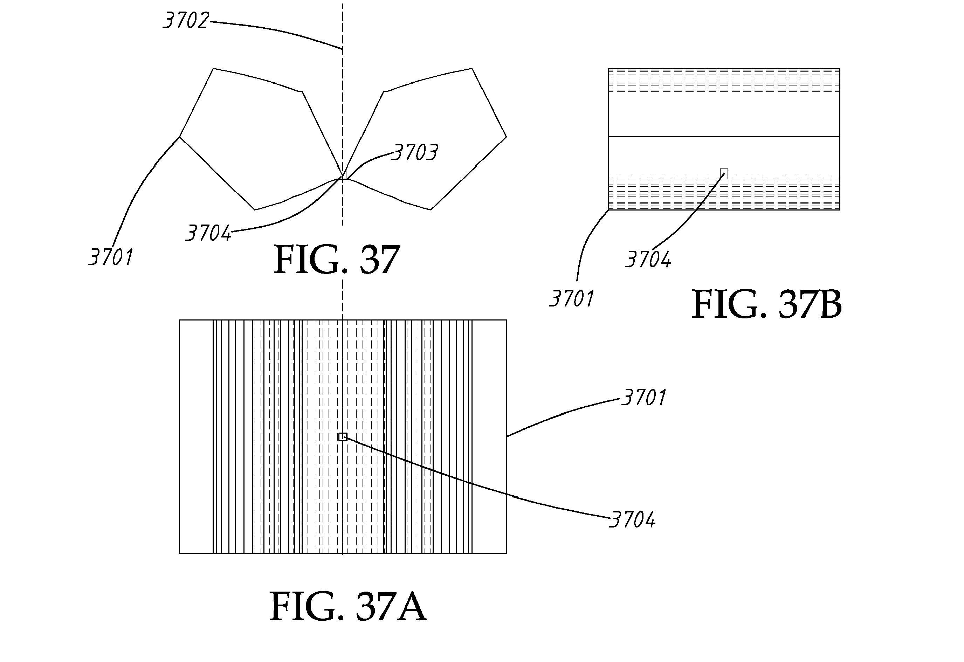

FIGS. 37, 37A and 37B show a light distribution panel in accordance with a 25^{th} embodiment of the present invention. According to this 25^{th} embodiment, the light distribution panel **3701** is divided by a center imaginary line **3702** into a right half and a left half. The structure of the right half is same as the aforesaid 24^{th} embodiment with the exception that the faces according to this 25^{th} embodiment constitute a rectangular configuration. Further, the light distribution panel **3701** has a through hole **3704** cut through the center of the panel **3703**. Further, the tilting angle, curvature and surface area of every face of the light distribution panel **3701** are respectively designed subject to the respective desired angle of refraction or reflection.

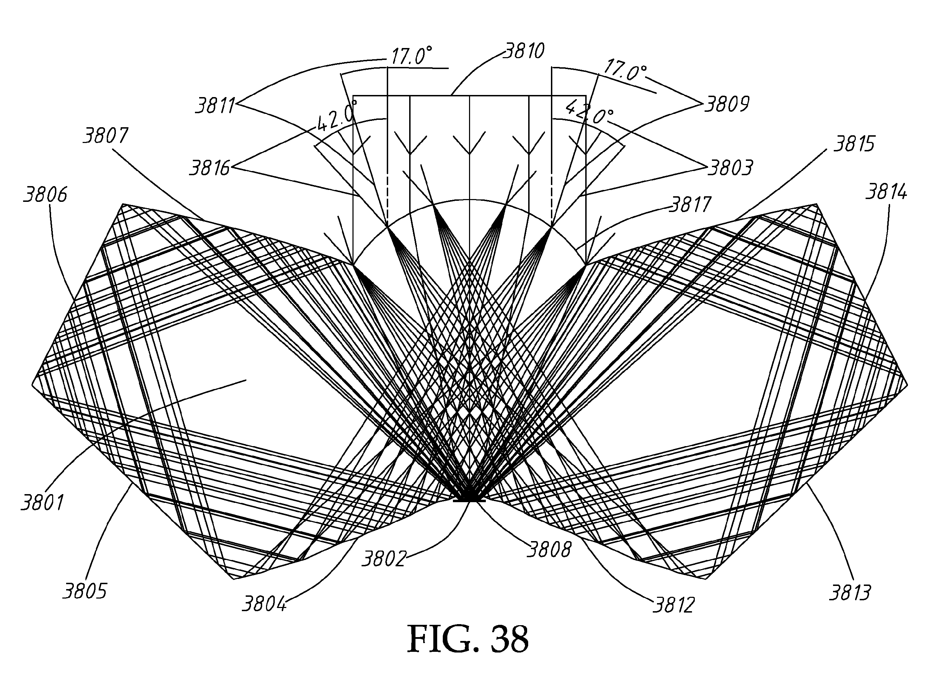

FIG. 38 shows still another application example of the present invention. According to this application example, the light distribution panel **3801** is prepared subject to the aforesaid 21^{st} embodiment, having the center of the bottom side thereof mounted with a solar collector panel **3802**. If the incident angles of sunlight that falls upon the top light-receiving face **3803** are within the range of 25-degrees between 42° **3803** and 17 ° **3809** relative to the vertical line, incident light rays are refracted in the light distribution panel **3801**. When these light rays enter a light distribution curve **3804** formed of a number of faces, onto different faces of the light distribution panel **3801**, they are reflected into parallel light rays. When light rays fall upon the face **3805**, the incident angles of these light rays are greater than the critical angle of the light distribution panel, and therefore they are reflected upwardly leftwards toward the face **3806** where the incident angles of the light rays are greater than the critical angle of the light distribution panel. Therefore, the light rays that fall upon the face **3806** are reflected upwardly rightwards a light distribution curve **3807** that is formed of a number of faces. When light rays fall upon the light distribution curve **3807**, they are reflected toward the bottom center face **3808** and condensed onto the solar collector panel **3802**. When the incident angle of sunlight that falls upon the top light receiving face **3817** is smaller than 17 ° **3809** relative to the vertical line, incident light rays are refracted by the top light receiving face **3817** onto the inside of the light distribution panel. When light rays reach the bottom face **3808**, they are refracted onto the border are of the solar collector panel **3802**. The light rays that fall upon the light distribution panel at an angle relatively closer to the vertical line can be radiated onto the solar collector panel over a relatively larger area. When light rays **3801** fall vertically upon the top side of the light distribution panel, the range where light rays are radiated onto the solar collector panel reaches the maximum level. When light rays are moving toward the left side, the range where light rays are radiated onto the solar collector panel is relatively reduced. When light rays enter the range where the incident angle relative to the vertical line is greater than 17 °, the radiation range of the incident light is beyond the collar collector panel **3802** and enters the range of the light distribution curve **3812** of the light distribution panel. The light rays of which the incident angles are within the range of 25-degrees between 42° and 17 ° relative to the vertical line are reflected by the light distribution curve **3812**, the face **3813**, the face **3814** and the light distribution curve **3815** onto the solar collector panel **3802**.

The aforesaid various embodiments of the present invention are practical for use in conventional lighting fixtures to substitute for a conventional light transmitting lampshade, for making road lines or road reflectors, or for use in a solar collection system for gathering solar energy onto a solar collector panel.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A light distribution panel, comprising at least four faces, said at least four faces comprising at least one light receiving face for receiving external light rays, at least one light reflective face and at least one light refractive face, each said face comprising a respective curvature, a respective tilting angle and a respective surface area determined subject a predetermined angle of refraction or reflection.

2. The light distribution panel as claimed in claim 1, which is used in a lamp and arranged on a light output side of said lamp for controlling refraction and reflection of light rays from said lamp to have the light rays be evenly distributed onto a predetermined illumination area, said lamp comprising at least one lampshade and at least one light source.

3. The light distribution panel as claimed in claim 1, which is applicable to roads and rails to reflect light.

4. The light distribution panel as claimed in claim 1, which is applicable to a solar system for collecting solar energy onto a solar collector panel.

5. The light distribution panel as claimed in claim 1, wherein the faces of the light distribution panel are planar faces.

6. The light distribution panel as claimed in claim 1, wherein the faces of the light distribution panel are arched faces.

7. The light distribution panel as claimed in claim 1, wherein the faces of the light distribution panel are a combination of planar faces and arched faces.

8. The light distribution panel as claimed in claim 1, which is configured to show one of rectangular, circular, oval and irregular forms.

9. The light distribution panel as claimed in claim 1, which is prepared from a material group of light transmitting plastics and light transmitting glass.

10. The light distribution panel as claimed in claim 6, wherein said arched faces of convex faces.

11. The light distribution panel as claimed in claim 6, wherein said arched faces of concave faces.

12. The light distribution panel as claimed in claim 7, wherein said arched faces of convex faces.

13. The light distribution panel as claimed in claim 7, wherein said arched faces of concave faces.
